# EUROPEAN PATENT APPLICATION

(11) **EP 4 718 247 A1**
(43) Date of publication of application: **01.04.2026**
(21) Application number: 24855266.3
(22) Date of filing: 21.03.2024
(51) Int. Cl.: G06F 9/451

(54) **TRANSITION ANIMATION PLAYBACK METHOD AND ELECTRONIC DEVICE**

(30) Priority: 24.08.2023 CN 202311076331
(71) Applicant: Honor Device Co., Ltd., Shenzhen, Guangdong 518040 (CN)
(72) Inventor: SUN, Wenyong, Shenzhen, Guangdong 518040 (CN); WANG, Wei, Shenzhen, Guangdong 518040 (CN); HAN, Feng, Shenzhen, Guangdong 518040 (CN)
(74) Representative: Isarpatent
(86) International application number: PCT/CN2024/082879
(87) International publication number: WO 2025/039535

(57) **Abstract**

This application discloses a transition animation effect playing method, and pertains to the field of interface switching technologies. The method includes: displaying, by an electronic device, a first interface, where the first interface includes a first control; performing a drawing operation on a second interface in response to a tap operation input by a user on the first control; sending an animation effect start notification message to a target animation effect playing thread after the drawing operation on the second interface is completed; drawing, by the target animation effect playing thread, a transition animation effect between the first interface and the second interface in response to the animation effect start notification message; and displaying, by the electronic device, the second interface after display of a plurality of frames of animation effect pictures is completed. In this way, compared with a solution in which a Vsync signal is used to trigger to draw a transition animation effect, in this application, after the animation effect playing thread receives the animation effect start notification message, a procedure of drawing a transition animation effect can be triggered without waiting for triggering by a Vsync signal. In this case, a tap response delay can be shortened by half a Vsync period on average.

## Description

This application claims priority to Chinese Patent Application No. 202311076331.9, filed with the China National Intellectual Property Administration on August 24, 2023 and entitled "TRANSITION ANIMATION EFFECT PLAYING METHOD AND ELECTRONIC DEVICE", which is incorporated herein by reference in its entirety.

### TECHNICAL FIELD

This application pertains to the field of interface switching technologies, and specifically relates to a transition animation effect playing method and an electronic device.

### BACKGROUND

With development of an intelligent technology, a user may implement human-computer interaction with an electronic device by using a screen. For example, the user may tap an application control on the screen to trigger application interface switching. During interface switching, a transition animation effect may be used to provide a better visual effect, which makes the interface switching smoother and more natural.

A tap response delay is a key indicator for measuring touch experience. For a scenario in which a transition animation effect needs to be played, the tap response delay is time required from inputting a tap operation by the user to starting to play the transition animation effect by the electronic device.

Currently, there is still a problem of a poor tap response in some scenarios including playing a transition animation effect. In other words, there is a problem of delayed display of the transition animation effect by the electronic device, which affects user experience.

### SUMMARY

This application provides a transition animation effect playing method and an electronic device, which can optimize a tap response delay and provide user experience.

According to a first aspect, this application provides a transition animation effect playing method. The method is applied to an electronic device, and the method includes: displaying, by the electronic device, a first interface, where the first interface includes a first control; performing a drawing operation on a second interface in response to a tap operation input by a user on the first control; sending an animation effect start notification message to a target animation effect playing thread after the drawing operation on the second interface is completed, where the animation effect start notification message is used to instruct the target animation effect playing thread to start an animation effect drawing operation; drawing, by the target animation effect playing thread, a transition animation effect between the first interface and the second interface in response to the animation effect start notification message, where the transition animation effect includes a plurality of frames of animation effect pictures; and displaying, by the electronic device, the second interface after display of the plurality of frames of animation effect pictures is completed.

In this way, compared with a solution in which a Vsync signal is used to trigger to draw a transition animation effect, in this application, after the animation effect playing thread receives the animation effect start notification message, a procedure of drawing a transition animation effect can be triggered without waiting for triggering by a Vsync signal. In this case, a tap response delay can be shortened by half a Vsync period on average.

In a possible implementation, the drawing, by the target animation effect playing thread, a transition animation effect between the first interface and the second interface in response to the animation effect start notification message includes: drawing, by the target animation effect playing thread, a first animation effect picture in the plurality of frames of animation effect pictures in response to the animation effect start notification message, where the first animation effect picture is an initial frame of animation effect picture in the plurality of frames of animation effect pictures; sending a Vsync request signal to an image composer before drawing a second animation effect picture, where the second animation effect picture includes an animation effect picture different from the initial frame of animation effect picture in the plurality of frames of animation effect pictures; and drawing, by the target animation effect playing thread, the second animation effect picture in response to the Vsync signal.

In a possible implementation, the drawing, by the target animation effect playing thread, a transition animation effect between the first interface and the second interface in response to the animation effect start notification message includes: skipping, by the target animation effect playing thread, an initial frame of animation effect picture in the plurality of frames of animation effect pictures in response to the animation effect start notification message, and drawing a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface; sending a Vsync request signal to an image composer before drawing a third animation effect picture, where the third animation effect picture includes an animation effect picture different from the initial frame of animation effect picture and the second frame of animation effect picture in the plurality of frames of animation effect pictures; and drawing, by the target animation effect playing thread, the third animation effect picture in response to the Vsync signal.

In this way, after receiving the animation effect start notification message, the target animation effect playing thread skips a first frame of animation effect picture, and directly starts to draw and display the second frame of animation effect picture. In addition, a trigger condition for the drawing operation on the second frame of animation effect picture is the animation effect start notification message. In this way, compared with the solution in which a Vsync signal is used to trigger to draw a transition animation effect, tap response duration can be shortened by one and a half Vsync period on average.

In a possible implementation, the drawing a second frame of animation effect picture in the plurality of frames of animation effect pictures includes: obtaining, in response to the animation effect start notification message, interface drawing data and an animation effect parameter that correspond to the second interface, where the animation effect parameter includes an animation effect type and a correspondence between an animation effect playing progress and animation effect playing time; determining animation effect playing time corresponding to the second frame of animation effect picture; determining, based on the animation effect curve and the animation effect playing time corresponding to the second frame of animation effect picture, an animation effect playing progress corresponding to the second frame of animation effect picture; determining, based on the interface drawing data corresponding to the second interface, the animation effect playing progress corresponding to the second frame of animation effect picture, and the animation effect type, interface drawing data corresponding to the second frame of animation effect picture; and drawing the second frame of animation effect picture based on the interface drawing data corresponding to the second frame of animation effect picture.

In this way, based on the interface drawing data and the animation effect parameter that correspond to the second interface, interface drawing data corresponding to each frame of animation effect picture may be determined, so that each frame of animation effect picture can be drawn.

In a possible implementation, before the performing a drawing operation on a second interface, the method further includes: determining the tap operation scenario in response to the tap operation input by the user on the first control; and generating drawing information of the second interface when the tap operation scenario is an application startup scenario, where the drawing information includes remote animation effect indication information, and the remote animation effect indication information is used to indicate that the target animation effect playing thread is a remote animation effect playing thread.

In this way, transition animation effects may be divided into a remote animation effect and a non-remote animation effect. An animation effect playing thread of the remote animation effect may be a desktop launcher, and an animation effect playing thread of a local animation effect may be an animation effect playing thread anim.lf inside a system server, that is, a system-default animation effect thread.

In a possible implementation, the sending an animation effect start notification message to a target animation effect playing thread after the drawing operation on the second interface is completed includes: obtaining the drawing information after the drawing operation on the second interface is completed; determining the target animation effect playing thread based on the drawing information; and sending the animation effect start notification message to the target animation effect playing thread.

In a possible implementation, the determining the target animation effect playing thread based on the drawing information includes: when the drawing information includes the remote animation effect indication information, determining the remote animation effect playing thread as the target animation effect playing thread; and when the drawing information does not include the remote animation effect indication information, determining a local animation effect playing thread as the target animation effect playing thread.

In a possible implementation, the local animation effect playing thread includes a default animation effect playing thread in a system server of the electronic device, and the remote animation effect playing thread includes a desktop launcher.

In a possible implementation, the first interface is a main interface of the electronic device; or the first interface is an interface of an application in the electronic device.

In this case, if the first interface is the main interface of the electronic device, a corresponding tap operation scenario is an application startup scenario. If the first interface is the interface of the application in the electronic device, a corresponding tap operation scenario is an in-application tap operation scenario.

According to a second aspect, this application provides a transition animation effect playing method. The method is applied to an electronic device, and the method includes: displaying, by the electronic device, a first interface, where the first interface includes a first control; performing a drawing operation on a second interface in response to a tap operation input by a user on the first control; sending an animation effect start notification message to a target animation effect playing thread after the drawing operation on the second interface is completed, where the animation effect start notification message is used to instruct the target animation effect playing thread to start an animation effect playing operation; sending a first Vsync request signal to an image composer in response to the animation effect start notification message, where the first Vsync request signal is used to request to draw a transition animation effect between the first interface and the second interface, and the transition animation effect includes a plurality of frames of animation effect pictures; skipping, by the target animation effect playing thread, an initial frame of animation effect picture in the plurality of frames of animation effect pictures in response to the first Vsync signal, and drawing a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface; sending a second Vsync request signal to the image composer before drawing a third animation effect picture, where the third animation effect picture includes an animation effect picture different from the initial frame of animation effect picture and the second frame of animation effect picture in the plurality of frames of animation effect pictures; drawing, by the target animation effect playing thread, the third animation effect picture in response to the second Vsync signal; and displaying, by the electronic device, the second interface after display of the second frame of animation effect picture and the third animation effect picture is completed.

In this way, after receiving the animation effect start notification message, the target animation effect playing thread skips a first frame of animation effect picture, and directly starts to draw and display the second frame of animation effect picture. In this way, compared with a solution in which a Vsync signal is used to trigger to draw a first frame of animation effect picture in a transition animation effect, tap response duration can be shortened by a Vsync period.

In a possible implementation, the skipping, by the target animation effect playing thread, an initial frame of animation effect picture in the plurality of frames of animation effect pictures in response to the first Vsync signal, and drawing a second frame of animation effect picture in the plurality of frames of animation effect pictures includes: obtaining, in response to the first Vsync signal, interface drawing data and an animation effect parameter that correspond to the second interface, where the animation effect parameter includes an animation effect type and a correspondence between an animation effect playing progress and animation effect playing time; determining animation effect playing time corresponding to the second frame of animation effect picture; determining, based on the animation effect curve and the animation effect playing time corresponding to the second frame of animation effect picture, an animation effect playing progress corresponding to the second frame of animation effect picture; determining, based on the interface drawing data corresponding to the second interface, the animation effect playing progress corresponding to the second frame of animation effect picture, and the animation effect type, interface drawing data corresponding to the second frame of animation effect picture; and drawing the second frame of animation effect picture based on the interface drawing data corresponding to the second frame of animation effect picture.

According to a second aspect, this application provides an electronic device. The electronic device includes a memory and a processor, the memory is coupled to the processor, the memory is configured to store computer program code, the computer program code includes computer instructions, and when the processor executes the computer instructions, the electronic device is enabled to perform the method according to any one of the possible implementations of the first aspect.

According to a third aspect, this application provides a computer program product. The computer program product includes a computer program or instructions, and when the computer program or the instructions are run on a computer, the computer is enabled to perform the method according to any one of the possible implementations of the first aspect.

### BRIEF DESCRIPTION OF DRAWINGS

To describe the technical solutions in embodiments of the present invention or the conventional technology more clearly, the following briefly describes the accompanying drawings required for describing the embodiments or the conventional technology. Clearly, the accompanying drawings in the following description show some embodiments of the present invention, and persons of ordinary skill in the art may still derive other drawings from these accompanying drawings without creative efforts.
FIG. 1 is a schematic diagram of human factor analysis for a response delay according to an embodiment of this application;
FIG. 2A to FIG. 2D are example diagrams of transition animation effect playing interfaces according to an embodiment of this application;
FIG. 3 is a flowchart of a transition animation effect playing method according to an embodiment of this application;
FIG. 4 is a schematic diagram of a hardware structure of an electronic device according to an embodiment of this application;
FIG. 5 is a schematic diagram of a software structure of an electronic device according to an embodiment of this application;
FIG. 6 is a flowchart of another transition animation effect playing method according to an embodiment of this application;
FIG. 7 is a flowchart of a method for determining an animation effect playing thread according to an embodiment of this application;
FIG. 8 is a flowchart of a method for drawing an animation effect picture according to an embodiment of this application;
FIG. 9 is an example diagram of an animation effect curve according to an embodiment of this application;
FIG. 10 is a flowchart of another transition animation effect playing method according to an embodiment of this application;
FIG. 11 is a flowchart of another transition animation effect playing method according to an embodiment of this application;
FIG. 12 is a flowchart of another transition animation effect playing method according to an embodiment of this application;
FIG. 13 is a flowchart of another transition animation effect playing method according to an embodiment of this application;
FIG. 14 is a schematic diagram of a structure of a transition animation effect playing apparatus according to an embodiment of this application; and
FIG. 15 is a schematic diagram of a structure of another transition animation effect playing apparatus according to an embodiment of this application.

### DESCRIPTION OF EMBODIMENTS

The technical solutions in the embodiments of this application are described below with reference to the accompanying drawings.

With development of a touch screen technology, a user may implement human-computer interaction with an electronic device by using a touch screen. For example, the user may input a touch operation such as a slide operation or a tap operation by using the touch screen. In this way, the electronic device may make a corresponding response based on the touch operation input by the user.

A response delay of the electronic device to the touch operation of the user is a key indicator for measuring touch experience. The response delay is time required by the electronic device to display, on a display after receiving the touch operation input by the user, an interface corresponding to the touch operation. A shorter response delay of the electronic device to the touch operation indicates better touch experience of the user. On the contrary, if the response delay of the electronic device to the touch operation is relatively long, the user perceives display lagging or stuttering, which affects user experience.

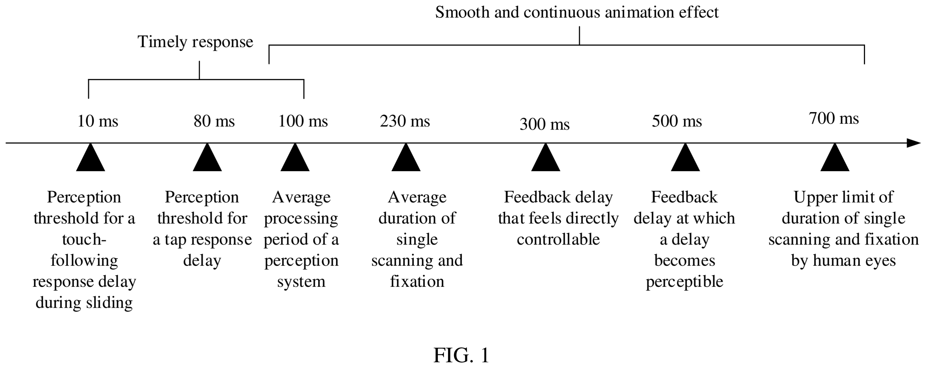

FIG. 1 is a schematic diagram of human factor analysis for a response delay according to an embodiment of this application. As shown in FIG. 1, a perception threshold of a user for a touch-following response delay during sliding is 10 ms, a perception threshold of the user for a tap response delay is 80 ms, an average processing period of a perception system of an electronic device is 100 ms, average duration of single scanning and fixation by human eyes is 230 ms, a feedback delay that feels directly controllable is 300 ms, a feedback delay at which a delay becomes perceptible is 500 ms, and an upper limit of duration of single scanning and fixation by human eyes is 700 ms. To be specific, if the touch-following response delay during sliding is greater than 10 ms, the user perceives the touch-following response delay during sliding, and if the tap response delay is greater than 80 ms, the user perceives the tap response delay. When transition animation effect playing time is about 100 ms to 700 ms, an animation effect perceived by the user is smooth and continuous.

Therefore, to improve visual experience of the user, it is expected that various response delays of the electronic device are to be shortened as much as possible. For example, the solutions provided in the embodiments of this application are used to optimize a tap response delay, so as to shorten the tap response delay.

Currently, in some tap operation scenarios, a tap response delay of the electronic device is relatively long, and therefore needs to be further optimized. For example, in a scenario in which a tap operation is input in some applications to trigger interface switching, a tap response delay of the electronic device is 96.2 ms. For another example, in a scenario in which some application controls are tapped to trigger application startup, a tap response delay of the electronic device is 89.75 ms.

Therefore, in this application, the tap response delay is expected to be further optimized to improve user experience.

In the embodiments of this application, a tap operation scenario includes an application startup scenario and an in-application tap operation scenario. The application startup scenario refers to a scenario in which an application control is tapped to trigger to start an application. To be specific, in response to a tap operation performed by a user on the application control, the electronic device switches from a main interface (which is also referred to as a home screen, and the home screen may include a plurality of application controls) to an application main interface of the application. The application startup scenario belongs to a cold start scenario. The in-application tap operation scenario means that a tap operation is performed in an application interface of an application, so as to trigger the electronic device to switch from a current application interface to another application interface of the application. The in-application tap operation scenario belongs to a hot start scenario.

It may be learned that both the application startup scenario and the in-application tap operation scenario are related to interface switching. Currently, during interface switching, a transition animation effect is used to provide a better visual effect, thereby making the interface switching smoother and more natural. In this case, for the tap operation scenario, a tap response delay refers to duration from inputting a tap operation by a user to starting to play a transition animation effect by the electronic device.

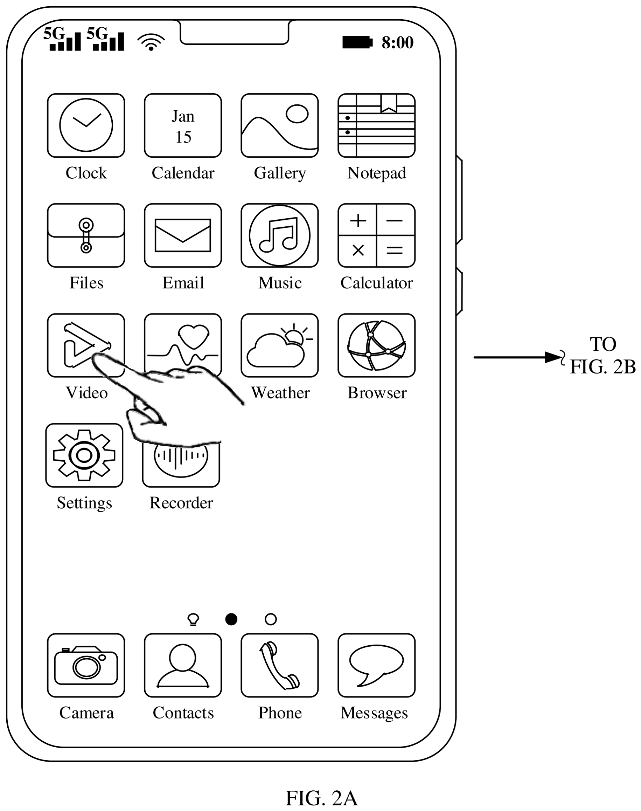

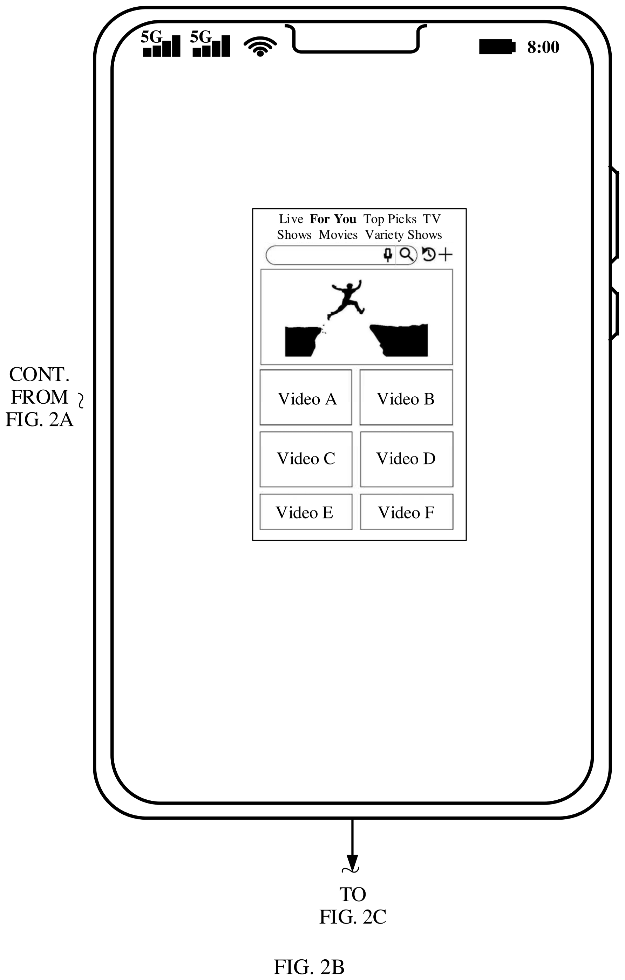

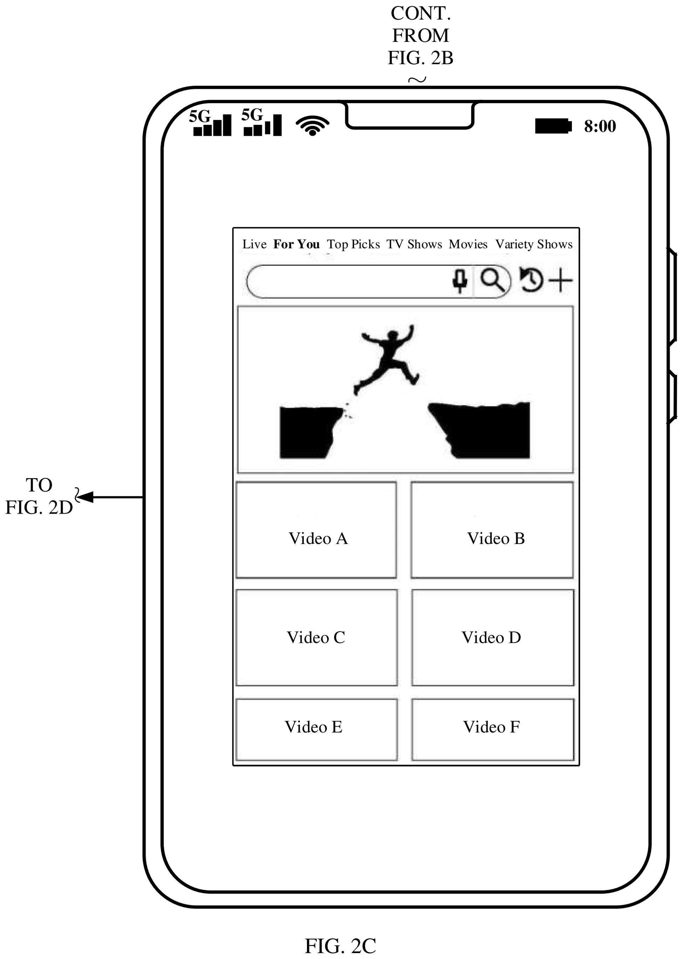

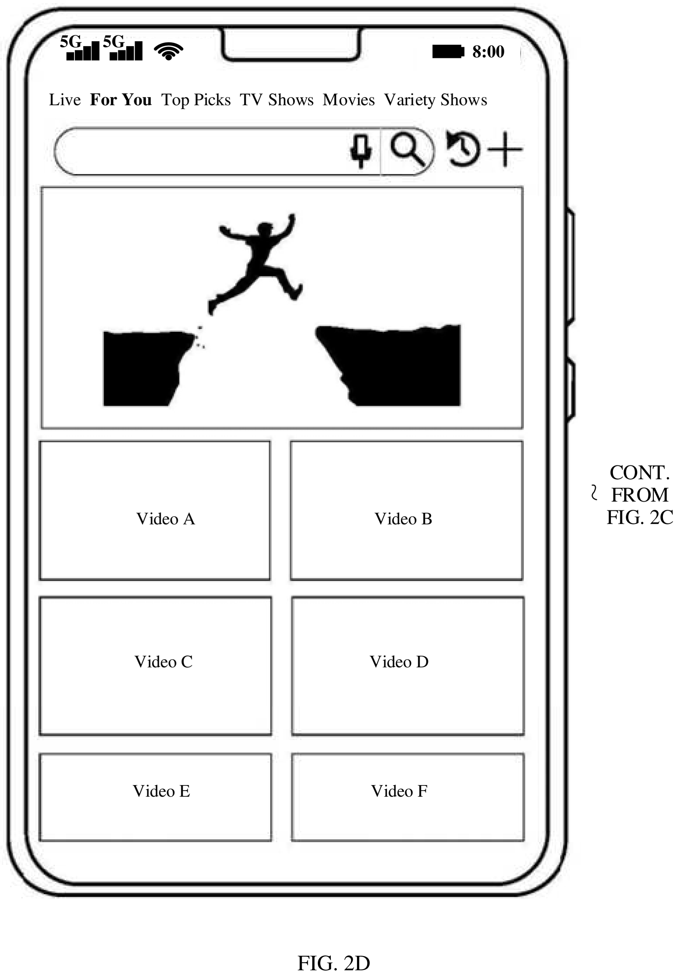

For example, as shown in part FIG. 2A, a user taps a control of a video application on a home screen of an electronic device 100. As shown in FIG. 2B, FIG. 2C, and FIG. 2D, in response to the tap operation input by the user, the electronic device first plays a transition animation effect, and then switches an interface to a main interface of the video application. As shown in FIG. 2B, FIG. 2C, and FIG. 2D, the transition animation effect refers to a transition animation effect effect that gradually scales up the main interface of the video application until the main interface of the video application fully covers an entire display interface. In this way, the transition animation effect is used to provide a visual transition effect, thereby making interface switching smoother and more natural.

The following uses an in-application tap operation scenario as an example to describe a process from inputting a tap operation by a user to starting to play a transition animation effect by an electronic device.

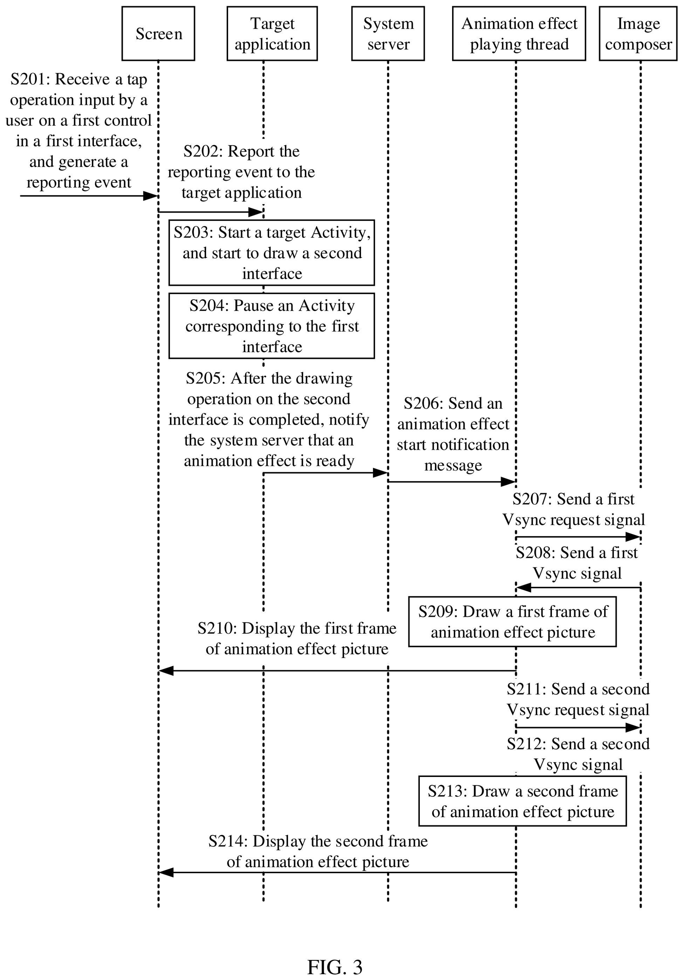

FIG. 3 is a flowchart of a transition animation effect playing method according to an embodiment of this application. As shown in FIG. 3, the method may include the following steps.

S201: Receive a tap operation input by a user on a first control in a first interface, and generate a reporting event.

In some embodiments, the first interface may be an interface of any application in an electronic device. In this case, the first control may be any control in any application interface. For example, the first interface is a video search interface of a video application, and the first control is a control corresponding to a video A in the video search interface. In this case, a tap operation scenario is an in-application interface switching scenario, and the in-application interface switching scenario belongs to a hot start scenario.

S202: Report the reporting event to a target application.

When a touch sensor inside a screen receives a touch operation, a kernel layer processes the touch operation to generate the reporting event (including information such as touch coordinates, touch pressure, and a timestamp of the touch operation). The kernel layer further reports the reporting event to an application framework layer. The application framework layer may parse information of the reporting event (including an operation type, a reporting position, and the like), determine the target application based on a current focus, and send information obtained through parsing to the target application. A focus may be a touch point position in the touch operation. The target application is an application running in a foreground of the electronic device or an application corresponding to the touch position in the touch operation. The target application may determine, based on the information of the reporting event obtained through parsing (for example, the reporting position), a control corresponding to the tap operation. An interface that is switched to and that corresponds to the control can be further determined.

For example, if the first interface is the video search interface of the video application and the first control is the control corresponding to the video A in the video search interface, the application framework layer may learn, through parsing based on the reporting event, a corresponding target application corresponding is the video application.

S203: In response to receiving the reporting event, the target application starts a target activity (Activity), and starts to draw a second interface.

An Activity is a component that represents an application interface. The Activity is part of an Android application and is responsible for managing interaction between a user and an application. Each Activity corresponds to a user interface, which may include various View (View) and Layout (Layout) elements, and is used to display information, receive a user input, and perform an operation.

The Activity may be understood as a window of an application, and the user may perform interaction in the window. The Activity may include a user interface element such as a menu, a button, or a text box, as well as interaction with another Activity. By starting different Activities, the user can switch between different interfaces and functions in the application.

In response to receiving the reporting event, the target application may create and start a new Activity, that is, a target Activity, by invoking an Activity startup interface of a system. The target Activity is an Activity corresponding to the second interface. The second interface refers to an interface switched to by a target based on the tap operation.

S204: Pause an Activity corresponding to the first interface.

After receiving the reporting event, the target application starts a new Activity and pauses a previous Activity. The new Activity is the Activity corresponding to the second interface, and the previous Activity is the Activity corresponding to the first interface. Pausing the previous Activity means that the previous Activity loses a focus and enters a pause state, and stops responding to a user input.

For example, it is assumed that the first interface is the video search interface, and the second interface is a video detail interface. In this way, after receiving the reporting event, the video application starts an Activity corresponding to the video detail interface, and pauses an Activity of the video search interface.

After starting an Activity corresponding to the tap operation, the target application starts to draw the second interface.

A process of drawing the second interface mainly includes: starting to start a new Activity, and entering a visible state; and then, further entering an active state (Activity Resume). In the state of Activity Resume, the system performs a drawing operation on the second interface. This process relates to steps such as doFrame and finishDrawing. doFrame is a process of drawing each frame by an Android system. In a doFrame phase, the system performs an operation of drawing each frame of picture in the second interface, including an operation on the interface such measuring, layout, and drawing. finishDrawing is a last step of the drawing process, which indicates that the drawing operation is completed and that a transition animation effect is ready.

S205: After the drawing operation on the second interface is completed, the target application notifies a system server (system sever) that an animation effect is ready.

S206: The system server sends an animation effect start notification message apptransition ready to an animation effect playing thread.

In some embodiments, the second interface may include one or more frames of pictures. In this way, if the second interface includes one frame of picture, the system server sends the animation effect start notification message to the animation effect playing thread after the drawing operation on the second interface is completed. If the second interface includes a plurality of pictures, the system server sends the animation effect start notification message to the animation effect playing thread after a drawing operation on a first frame of picture in the plurality of pictures is completed. The animation effect start notification message is used to instruct the animation effect playing thread to start an animation effect drawing operation.

S207: After receiving the animation effect start notification message, the animation effect playing thread sends a first vertical synchronization (vertical synchronization, Vsync) request signal to an image composer (surfaceflinger, SF).

A Vsync signal is a periodic signal, and a Vsync signal period may be set based on a screen refresh rate. For example, when the screen refresh rate is 60 Hz, the Vsync signal period is 16.6 ms. To be specific, the electronic device generates a control signal every 16.6 ms to trigger the Vsync signal period. For another example, when the screen refresh rate is 90 Hz, the Vsync signal period may be 11.1 ms. To be specific, the electronic device generates a control signal every 11.1 ms to trigger the Vsync signal period.

S208: The image composer sends a first Vsync signal to the animation effect playing thread.

S209: In response to receiving the first Vsync signal, the animation effect playing thread draws a first frame of animation effect picture between the first interface and the second interface.

S210: Display the first frame of animation effect picture on a screen after the drawing operation on the first frame of animation effect picture is completed.

S211: Send a second Vsync request signal to the image composer.

S212: The image composer sends a second Vsync signal to the animation effect playing thread.

S213: In response to receiving the second Vsync signal, the animation effect playing thread starts to draw a second frame of animation effect picture between the first interface and the second interface.

S214: Display the second frame of animation effect picture on the screen after the drawing operation on the second frame of animation effect picture is completed.

The foregoing step S211 to step S214 are repeated until a last frame of animation effect picture is drawn, and the last frame of animation effect picture is displayed on the screen.

For drawn animation effect pictures, a display driver at the kernel layer may be used to enable the screen (a display) to display a corresponding animation effect picture. A procedure of displaying an animation effect is not limited in this embodiment of this application. For example, an animation effect picture may be displayed based on an existing Vsync signal-based trigger mechanism, that is, a procedure of refreshing screen display is triggered by using a hardware Vsync signal.

It should be noted that, in the foregoing embodiment, the in-application tap operation scenario is merely used as an example to describe a procedure of playing a transition animation effect, and this does not represent a limitation on the procedure of playing a transition animation effect. For a procedure of playing a transition animation effect in an application startup scenario, refer to the procedure in the foregoing embodiment. A difference lies in that in the application startup scenario, the target application is a desktop launcher. Correspondingly, the desktop launcher starts a cold start animation effect window instead of a new Activity. In this way, in the foregoing step S205, after a drawing operation on the cold start animation effect window is completed, the desktop launcher notifies the system server (system sever) that the animation effect is ready.

In conclusion, in the transition animation effect playing method shown in FIG. 3, after receiving the animation effect start notification message, the animation effect playing thread first requests a Vsync signal from the image composer. The animation effect playing thread is triggered to perform an animation effect drawing procedure only after the Vsync signal is received. In other words, after receiving the animation effect start notification message, the animation effect playing thread is not immediately triggered to perform the animation effect drawing procedure, but waits for triggering by the Vsync signal.

However, in a worst case, a process from receiving the animation effect start notification message to starting to perform the animation effect drawing procedure needs to wait for a Vsync period. In a best case, the process coincides exactly with a Vsync signal. In this case, in response to reception of the Vsync signal, the animation effect drawing procedure can start to be performed immediately. However, a probability of this case is extremely low. Usually, the process from receiving the animation effect start notification message to starting to perform the animation effect drawing procedure needs to wait for half a Vsync period on average. In this way, from a user perspective, display of the transition animation effect is delayed by at least half a Vsync period.

In addition, in some embodiments, the first frame of animation effect picture drawn in step S209 is the same as content of the first interface. Therefore, even if the first frame of animation effect picture is updated on the screen, the screen has no change from a user perspective, that is, the user cannot perceive a change of the user interface.

Based on the foregoing description, in the embodiments of this application, three transition animation effect playing methods are provided to optimize a tap response.

In a first solution, after receiving the animation effect start notification message, the animation effect playing thread can be triggered to perform a procedure of drawing the first frame of animation effect picture without waiting for triggering by a Vsync signal, thereby optimizing a tap response delay. In particular, for a tap operation scenario in which an original tap response delay is just beyond 80 ms, such as 89.75 ms or 96.2 ms, the tap response delay is probably to be optimized to be within 80 ms, so that a user cannot perceive the response delay, thereby improving user experience.

In a second solution, in response to receiving the first Vsync signal, the animation effect playing thread skips the first frame of animation effect picture, and directly starts a procedure of drawing the second frame of animation effect picture. In this way, in response to the tap operation input by the user, display starts directly from the second frame of animation effect picture, so that the user can perceive a change of an interface, thereby optimizing a tap response delay and improving user experience.

In a third solution, the first solution is combined with the second solution, that is, a procedure of drawing the second frame of animation effect picture can be triggered after the animation effect playing thread receives the animation effect start notification message. In this way, it is not necessary to wait for triggering by a Vsync signal, and a procedure of drawing the first frame of animation effect picture is skipped, thereby optimizing a tap response delay and improving user experience.

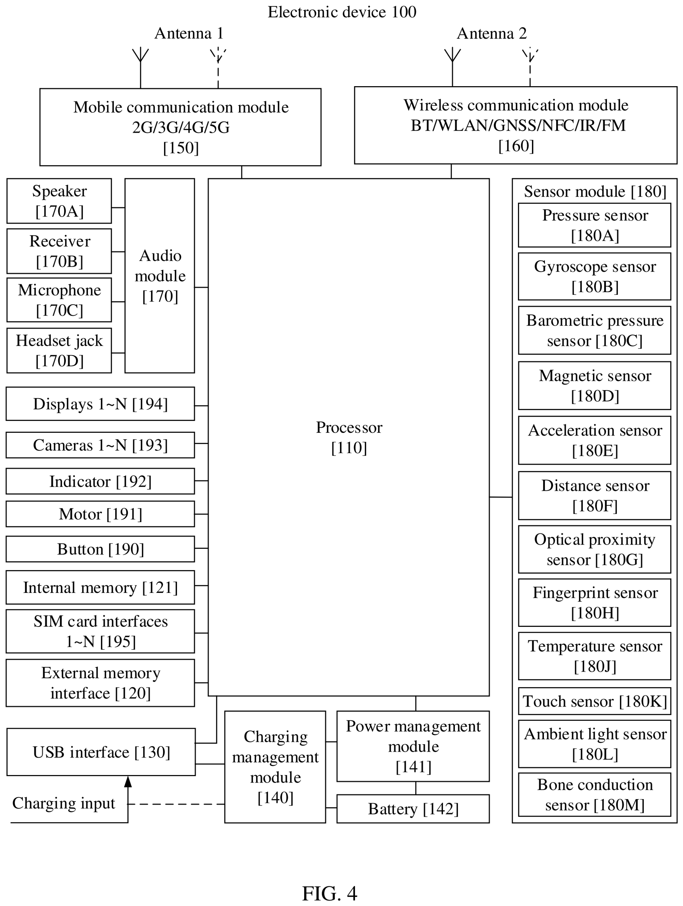

The transition animation effect playing method provided in the embodiments of this application may be applied to any electronic device with a touch screen, such as a mobile phone, a watch, or a tablet computer. For example, for a specific structure of the electronic device, refer to a schematic diagram of a structure of an electronic device shown in FIG. 4.

As shown in FIG. 4, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement the function of answering a call by using a Bluetooth headset. Both the I2S interface and the PCM interface may be used for audio communication.

The UART interface is a universal serial data bus used for asynchronous communication. The bus may be a bidirectional communication bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, may be configured to transmit data between the electronic device 100 and a peripheral device, or may be configured to connect to a headset to play audio by using the headset. The interface may alternatively be configured to connect to another electronic device, for example, an AR device.

It may be understood that, an interface connection relationship between the modules shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution for wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal obtained after modulation by the modem processor, and convert an amplified signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transmitted to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transmission mode between human brain neurons, and may further perform self-learning continuously. Applications such as intelligent cognition of the electronic device 100, for example, image recognition, face recognition, speech recognition, and text understanding, may be implemented by using the NPU.

The external memory interface 120 may be configured to connect to an external storage card, for example, a Micro SD card, to expand a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the internal memory 121 and/or the instructions stored in the memory disposed in the processor.

The electronic device 100 may implement an audio function such as music playing or sound recording by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The speaker 170A, also referred to as a "horn", is configured to convert an audio electrical signal into a sound signal. The electronic device 100 may be used to listen to music or answer a call in a hands-free mode by using the speaker 170A. A plurality of speakers 170A may be disposed in the electronic device 100. For example, one speaker 170A may be disposed at a top of the electronic device 100, and one speaker 170A may be further disposed at a bottom.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice. In some embodiments, the speaker 170A and the receiver 170B may alternatively be disposed as one component. This is not limited in this application.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, the electronic device 100 may be provided with two microphones 170C, to implement a noise reduction function in addition to collecting a sound signal. In some other embodiments, three, four, or more microphones 170C may alternatively be disposed in the electronic device 100, to collect a sound signal, reduce noise, further recognize a sound source, implement a directional sound recording function, and so on.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of pressure based on a change of the capacitance. When a touch operation is performed on the display 194, the electronic device 100 detects intensity of the touch operation based on the pressure sensor 180A. The electronic device 100 may also calculate a touch position based on a detected signal of the pressure sensor 180A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of the electronic device 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening/closing of a flip leather case by using the magnetic sensor 180D. In some embodiments, when the electronic device 100 is a flip phone, the electronic device 100 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect magnitudes of acceleration of the electronic device 100 in all directions (generally on three axes), may detect a magnitude and a direction of gravity when the electronic device 100 is still, and may be further configured to identify a posture of the electronic device, and is applied to applications such as switching between a landscape mode and a portrait mode and a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement fast focusing.

The optical proximity sensor 180G may include, for example, a light-emitting diode (LED) and an optical detector such as a photodiode. The light-emitting diode may be an infrared light-emitting diode. The electronic device 100 emits infrared light to the outside by using the light-emitting diode. The electronic device 100 uses the photodiode to detect infrared reflected light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint-based unlocking, application lock accessing, fingerprint-based photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to the low temperature. In some other embodiments, when the temperature is less than still another threshold, the electronic device 100 boosts an output voltage of the battery 142, to avoid abnormal power-off caused by the low temperature.

The touch sensor 180K is also referred to as a "touch control device". The touch sensor 180K may be disposed on the display 194. The touch sensor 180K and the display 194 form a touchscreen, also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display 194. In some other embodiments, the touch sensor 180K may alternatively be disposed on a surface of the electronic device 100, at a position different from that of the display 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively be in contact with a human pulse to receive a blood pressure pulse signal. In some embodiments, the bone conduction sensor 180M may alternatively be disposed in a headset, to form a bone conduction headset in combination with the headset. The audio module 170 may obtain a speech signal through parsing based on the vibration signal that is of the vibration bone in the vocal-cord part and that is obtained by the bone conduction sensor 180M, to implement a speech function. The application processor may parse heart rate information based on the blood pressure pulse signal obtained by the bone conduction sensor 180M, to implement a heart rate detection function.

The button 190 includes a power-on/off button, a volume button, or the like. The button 190 may be a mechanical button, or may be a touch button. The electronic device 100 may receive a key input and generate a key signal input related to user settings and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed incoming call, a notification, and the like.

The SIM card interface 195 is configured to connect to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may be further compatible with SIM cards of different types. The SIM card interface 195 may be further compatible with an external storage card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a microservice architecture, or a cloud architecture. In the embodiments of the present invention, an Android system with a layered architecture is used as an example to describe a software structure of the electronic device 100.

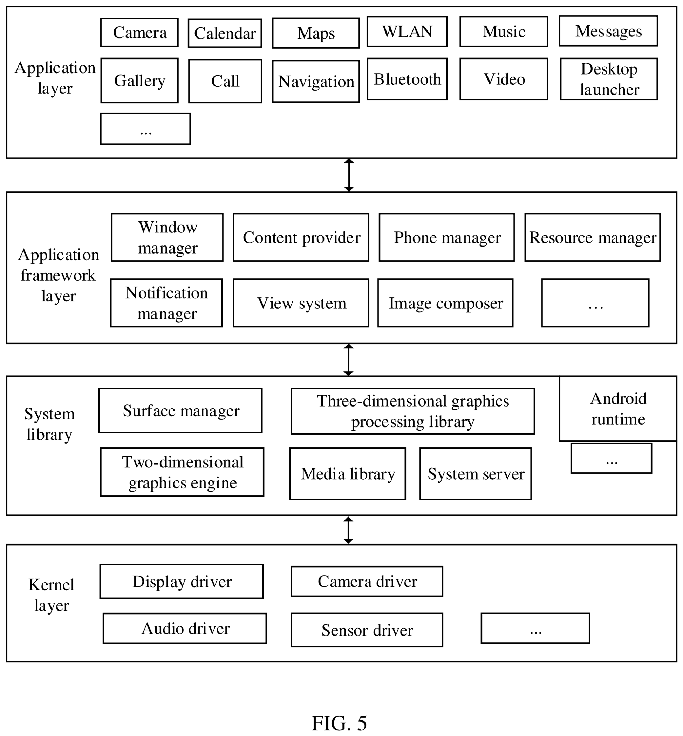

FIG. 5 is a block diagram of a software structure of the electronic device 100 according to an embodiment of this application.

In a layered architecture, software is divided into several layers, and each layer has a clear role and task. The layers communicate with each other through software interfaces. In some embodiments, an Android system is divided into four layers: an application layer, an application framework layer, an Android runtime (Android runtime) and system library, and a kernel layer from top to bottom.

The application layer may include a series of application packages.

As shown in FIG. 5, the application packages may include applications such as Camera, Gallery, Calendar, Phone, Maps, Navigation, WLAN, Bluetooth, Music, Video, Messages, and Desktop Launcher.

In this embodiment of this application, the desktop launcher may be used as an animation effect playing thread in an application startup scenario.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, an image composer, and the like.

The window manager is configured to manage a window program. The window manager may obtain a size of a display, determine whether a status bar exists, lock a screen, capture a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a control for displaying a text and a control for displaying a picture. The view system may be configured to build an application. A display interface may include one or more views. For example, a display interface including an SMS message notification icon may include a view for displaying a text and a view for displaying a picture.

The phone manager is configured to provide the electronic device 100 with a communication function, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of the system in a form of a graph or scroll bar text, for example, a notification of an application running in a background, or a notification that appears on a screen in a form of a dialog window. For example, text information is prompted in the status bar, an alert tone is made, the electronic device vibrates, or an indicator light blinks.

The image composer is configured to generate a Vsync signal. The image composer may include a Vsync thread, and the VSync thread is configured to generate a next VSync signal based on a VSync signal request.

The Android Runtime includes a kernel library and a virtual machine. The Android runtime is responsible for scheduling and management of the Android system.

The kernel library includes two parts: One part is a functional function that needs to be invoked in a java language, and the other part is a kernel library of Android.

The application layer and the application framework layer run in the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, an SGL) and a system server.

The surface manager is configured to manage a display subsystem, and provide fusion of 2D and 3D layers for a plurality of applications.

The media library supports playback and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The system server may include an animation effect playing thread anim.lf. In an in-application tap operation scenario, the animation effect playing thread anim.lf inside the system server may be invoked as an animation effect playing thread. The system server may be further configured to send an animation effect start notification message to the animation effect playing thread, to instruct the animation effect playing thread to start an animation effect drawing operation.

The kernel layer is a layer between hardware and software. The kernel layer includes at least a display driver, a camera driver, an audio driver, and a sensor driver.

In the embodiments of this application, for drawn animation effect pictures, the display driver at the kernel layer may be used to enable the screen (a display) to display a corresponding animation effect picture.

The following first describes a first tap response optimization solution provided in the embodiments of this application.

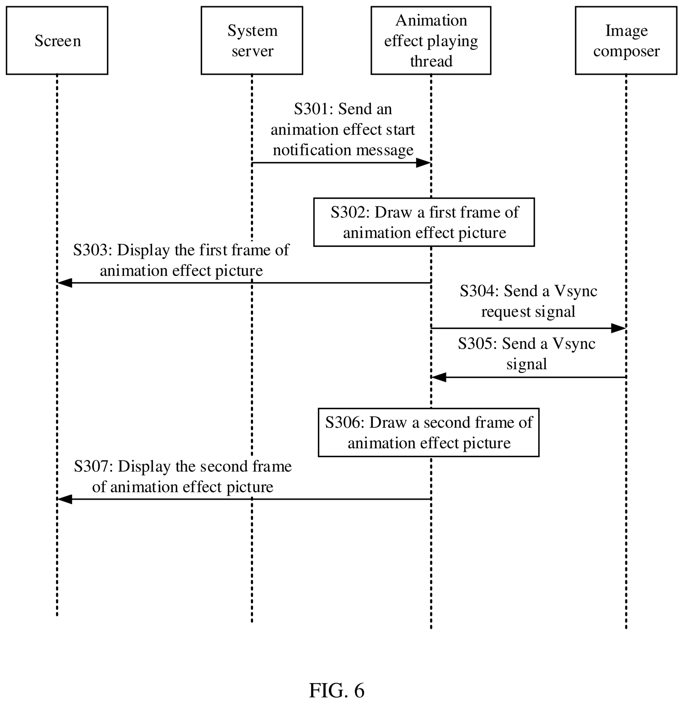

FIG. 6 is a flowchart of a transition animation effect playing method according to an embodiment of this application. As shown in FIG. 6, the method may include the following step.

S301: A system server sends an animation effect start notification message to an animation effect playing thread.

In this embodiment of this application, transition animation effects may be divided into a remote animation effect and a non-remote animation effect (also referred to as a local animation effect). The remote animation effect may be understood as a transition animation effect performed between different applications, and the non-remote animation effect may be understood as a transition animation effect performed between different interfaces of a same application. In other words, in this embodiment of this application, a transition animation effect in an application startup scenario belongs to the remote animation effect, and a transition animation effect in an in-application tap operation scenario belongs to the non-remote animation effect.

Animation effect playing threads that correspond to the remote animation effect and the non-remote animation effect and that are responsible for performing an animation effect drawing operation may be different. For example, for the application startup scenario (a cold start scenario), a remote animation effect playing thread may be used to perform the animation effect drawing operation; and for the in-application tap operation scenario (a hot start scenario), a local animation effect playing thread may be used to perform the animation effect drawing operation. The remote animation effect playing thread may be a desktop launcher, and the local animation effect playing thread may be an animation effect playing thread anim.lf inside a system server, that is, a system-default animation effect thread.

In this way, if a current tap operation scenario is the application startup scenario, the system server may send the animation effect start notification message to the desktop launcher, so as to trigger the desktop launcher to perform the animation effect drawing operation. If the current tap operation scenario belongs to the in-application tap operation scenario, the system server sends the animation effect start notification message to the animation effect playing thread anim.lf, so as to trigger the animation effect playing thread anim.lf to perform the animation effect drawing operation.

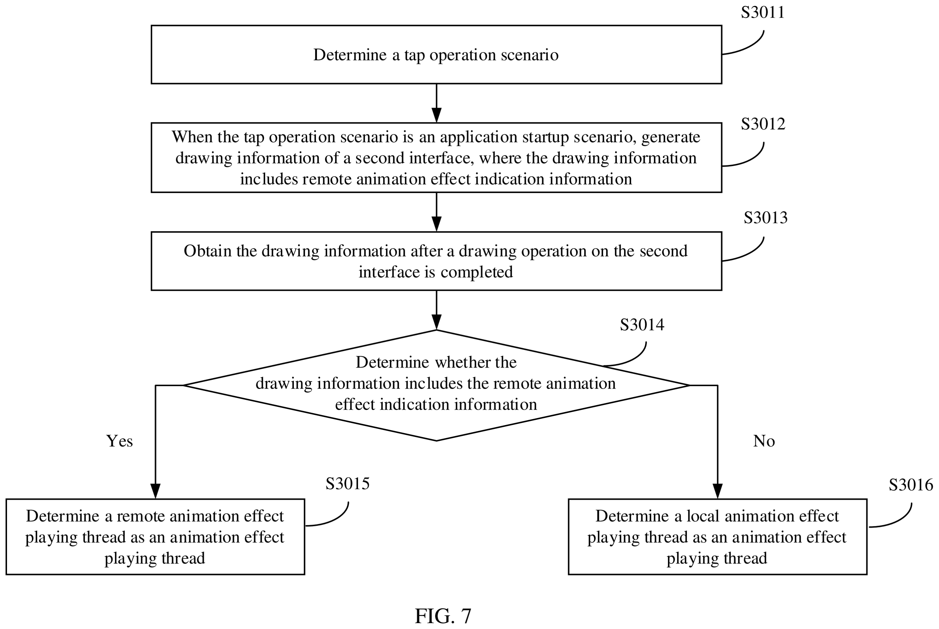

FIG. 7 is flowchart of a method for determining an animation effect playing thread according to an embodiment of this application. As shown in FIG. 7, the following steps may be included.

S3011: Determine a tap operation scenario in response to reception of a tap operation input by a user on a first control.

S3012: When the tap operation scenario is an application startup scenario, generate drawing information of a second interface, where the drawing information includes remote animation effect indication information.

In some embodiments, the drawing information of the second interface may generated in a target Activity startup phase. The remote animation effect indication information in the drawing information is used to indicate that an execution body responsible for an animation effect drawing operation is a remote animation effect playing thread.

Correspondingly, when the tap operation scenario is an in-application tap operation scenario, the generated drawing information of the second interface does not include the remote animation effect indication information.

S3013: Obtain the drawing information after a drawing operation on the second interface is completed.

S3014: Determine whether the drawing information includes the remote animation effect indication information.

S3015: When the drawing information includes the remote animation effect indication information, determine the remote animation effect playing thread as the animation effect playing thread.

S3016: When the drawing information does not include the remote animation effect indication information, determine a local animation effect playing thread as the animation effect playing thread.

In this way, if the remote animation effect indication information is not found in the drawing information, it indicates that the current tap operation scenario is the application startup scenario. In this case, the animation effect start notification message may be sent to the remote animation effect playing thread, that is, the desktop launcher. If the remote animation effect indication information can be found in the drawing information, it indicates that the current tap operation scenario is the in-application tap operation scenario. In this case, the animation effect start notification message may be sent to the local animation effect playing thread anim.lf.

If the desktop launcher is used as the animation effect playing thread, animation effect interaction with another application control on a home screen may be implemented, thereby improving user experience.

S302: After receiving the animation effect start notification message, the animation effect playing thread draws a first frame of animation effect picture between a first interface and the second interface.

For steps before the animation effect playing thread receives the animation effect start notification message, refer to descriptions of step S201 to step S206. Details are not described herein again.

In this embodiment of this application, after receiving the animation effect start notification message, the animation effect playing thread does not need to send a first Vsync request signal to an image composer, that is, does not need to wait for a first Vsync signal to trigger a drawing operation on the first frame of animation effect picture. Instead, after receiving the animation effect start notification message, the animation effect playing thread directly triggers the drawing operation on the first frame of animation effect picture. In this way, an animation effect drawing procedure may be immediately triggered to display the first frame of animation effect picture in a transition animation effect as soon as possible.

S303: Display the first frame of animation effect picture on a screen after the drawing operation on the first frame of animation effect picture is completed.

S304: The animation effect playing thread sends a Vsync request signal to the image composer.

S305: The image composer sends a Vsync signal to the animation effect playing thread.

S306: In response to receiving the Vsync signal, the animation effect playing thread draws a second frame of animation effect picture between the first interface and the second interface.

S307: Display the second frame of animation effect picture on the screen after the drawing operation on the second frame of animation effect picture is completed.

The foregoing step S304 to step S306 are repeated until a last frame of animation effect picture is drawn, and the last frame of animation effect picture is displayed on the screen.

In this embodiment of this application, only drawing of the first frame of animation effect picture does not need to wait for triggering by a Vsync signal. For drawing of the second frame of animation effect picture and each frame of animation effect picture after the second frame of animation effect picture, a Vsync signal-based trigger mechanism is still maintained. To be specific, for the second frame of animation effect picture and each frame of animation effect picture after the second frame of animation effect picture, a Vsync request signal needs to be sent to the image composer before each time of drawing, and when a Vsync signal is received, a corresponding animation effect picture is triggered to be drawn.

When a previous frame of animation effect picture is drawn, the Vsync request signal may be sent to the image composer to request to trigger a drawing operation on a next frame of animation effect picture. For example, when the first frame of animation effect picture is drawn, if it is determined that there is the second frame of animation effect picture after the first frame of animation effect picture, the Vsync request signal is sent to the image composer to request to trigger the drawing operation on the second frame of animation effect picture. Correspondingly, when the first frame of animation effect picture is drawn, if it is determined that there is no to-be-drawn animation effect picture after the first frame of animation effect picture, the Vsync request signal does not need to be sent to the image composer.

The following further describes a process of a procedure of drawing each frame of animation effect picture.

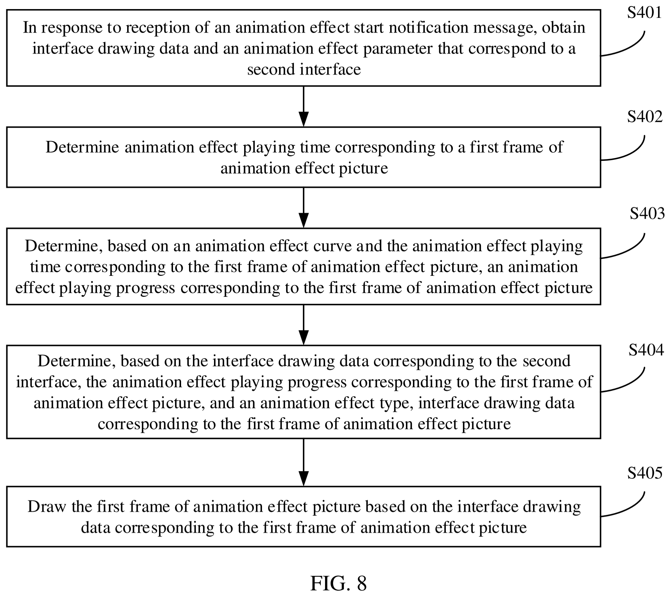

FIG. 8 is a flowchart of drawing an animation effect picture according to an embodiment of this application. As shown in FIG. 8, the following steps may be included:

S401: In response to reception of an animation effect start notification message, obtain interface drawing data and an animation effect parameter that correspond to a second interface.

The animation effect parameter may include an animation effect curve and an animation effect type.

The animation effect curve is used to represent a correspondence between an animation effect playing progress and animation effect playing time. The animation effect playing progress may be understood as a display percentage of an animation effect picture displayed in a user interface to a complete second interface. Based on different animation effect types, the display percentage may be a displacement percentage, a zoom percentage, a display depth percentage, or the like.

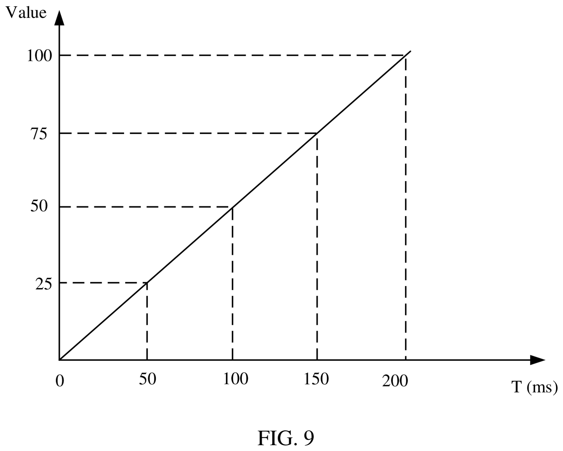

For example, as shown in FIG. 9, a horizontal coordinate of the animation effect curve may be animation effect playing time T, a vertical coordinate of the animation effect curve may be an animation effect playing progress value value, animation effect playing start time is at 0, animation effect playing end time is at 200 ms, and total animation effect playing duration is 200 ms. Based on the animation effect curve, an animation effect playing progress corresponding to each animation effect playing time point within the 200 ms may be determined.

For example, the animation effect playing progress value value may include 0-100, where value=0 indicates that the display percentage is 0, that is, the user interface does not display the second interface at all, and is still an interface before switching (a first interface); value=25 indicates that the display percentage is 25%; value=50 indicates that the display percentage is 50%; value=75 indicates that the display percentage is 75%; and value=100 indicates that the display percentage is 100%, that is, the user interface displays a complete second interface.

An image transformation manner of gradually scaling up the second interface is used as an example. When the animation effect playing time (that is, playing start time) is 0, the animation effect playing progress is 0, that is, content displayed in the user interface is still the first interface. When the animation effect playing time is 50 ms, the animation effect playing progress is 25, that is, the second interface displayed in the user interface occupies one quarter of the entire user interface. Similarly, when the playing time is 200 ms, the animation effect playing progress is 100, that is, the second interface fully covers the user interface.

An electronic device may set different animation effect curves based on types of an interface before switching and an interface after switching, and store the specified animation effect curve in a local database. In this way, the electronic device may invoke, based on different interface switching types, animation effect curves corresponding to the interface switching types.

For example, in a scenario in which a video search interface is switched to a detail interface of a video A, interface drawing data corresponding to the detail interface of the video A may be obtained, and an animation effect curve corresponding to a process in which the video search interface is switched to the detail interface of the video A is invoked.

When an animation effect is displayed, an animation effect picture is displayed frame by frame based on an animation effect type such as an image changing manner and an image moving direction. For example, the image transformation manner may include one or superimposition of more of translation, scaling, rotation, and color gradient. The image moving direction may include moving upward, downward, leftward, rightward, to the upper left, to the lower left, to the upper right, and to the lower right, and moving from a center toward a periphery and from the periphery toward the center, and so on.

S402: Determine animation effect playing time corresponding to a first frame of animation effect picture.

S403: Determine, based on the animation effect curve and the animation effect playing time corresponding to the first frame of animation effect picture, an animation effect playing progress corresponding to the first frame of animation effect picture.

From the animation effect playing start time, one frame of animation effect picture is played every Vsync period until the total animation effect picture playing duration reaches 200 ms. For example, the first frame of animation effect picture is played at animation effect playing time T0, a second frame of animation effect picture is played at animation effect playing time T1, and a third frame of animation effect picture is played at animation effect playing time T2. T1 and T0 are separated by one Vsync period, and T2 and T0 are separated by two Vsync periods. For example, a screen refresh rate is 60 Hz, T0 is 0 ms, T1=16.6 ms, and T2=33.2 ms.

Still referring to FIG. 9, based on the animation effect curve, the animation effect playing progress corresponding to each animation effect playing time point may be determined. In this way, after animation effect playing time corresponding to each frame of animation effect picture is determined, an animation effect playing progress corresponding to the frame of animation effect picture can be determined. For example, when the animation effect playing time corresponding to the first frame of animation effect picture is T0 (0 ms), and an animation effect playing progress corresponding to the animation effect playing time T0 is 0, it may be determined that the animation effect playing progress corresponding to the first frame of animation effect picture is 0. For another example, when the animation effect playing time corresponding to the first frame of animation effect picture is T1 (16.6 ms), and an animation effect playing progress corresponding to the animation effect playing time T1 is 8.3, it may be determined that the animation effect playing progress corresponding to the second frame of animation effect picture is 8.3.

In a possible implementation, the playing time corresponding to the first frame of animation effect picture may be determined in the following manner: After receiving animation effect start notification information, an animation effect playing thread obtains system time t0, and aligns the system time t0 with the animation effect playing time of 0 ms in the animation effect curve. In this way, it may be determined, based on the animation effect curve, that an animation effect playing progress corresponding to the current system time t0 is 0. In other words, it is equivalent to determining that the animation effect playing progress corresponding to the first frame of animation effect picture is 0.

S404: Determine, based on the interface drawing data corresponding to the second interface, the animation effect playing progress corresponding to the first frame of animation effect picture, and the animation effect type, interface drawing data corresponding to the first frame of animation effect picture.

S405: Draw the first frame of animation effect picture based on the interface drawing data corresponding to the first frame of animation effect picture.

After the animation effect playing progress corresponding to the first frame of animation effect picture is determined, the interface drawing data corresponding to the first frame of animation effect picture may be determined based on the interface drawing data corresponding to the second interface, the animation effect playing progress corresponding to the first frame of animation effect picture, and the animation effect type. After the interface drawing data corresponding to the first frame of animation effect picture is obtained, the first frame of animation effect picture may be drawn based on the interface drawing data corresponding to the first frame of animation effect picture.

It should be noted that a process of drawing the first frame of animation effect picture is only used as an example for description above. For a process of drawing the second frame of animation effect picture to a last frame of animation effect picture, refer to the foregoing descriptions of the process of drawing the first frame of animation effect picture.

For example, the process of drawing the second frame of animation effect picture may be implemented in the following manner: After receiving the 1^{st} Vsync signal, the animation effect playing thread obtains system time t1 again, and calculates a time difference (for example, the difference is 16.6 ms) between the current system time t1 and the previous system time t0, to obtain animation effect playing time corresponding to the second frame of animation effect picture. An interval between the animation effect playing time corresponding to the second frame of animation effect picture and the animation effect playing time of 0 ms is the difference of 16.6 ms between the current system time t1 and the previous system time t0. In this way, the current system time t1 may be aligned with the animation effect playing time of 16.6 ms in the animation effect curve, and further, an animation effect playing progress corresponding to the second frame of animation effect picture may be determined based on the animation effect curve and the animation effect playing time of 16.6 ms corresponding to the second frame of animation effect picture. Then, interface drawing data corresponding to the second frame of animation effect picture may be determined based on the interface drawing data corresponding to the second interface, the animation effect playing progress corresponding to the second frame of animation effect picture, and the animation effect type. Finally, the second frame of animation effect picture is drawn based on the interface drawing data corresponding to the second frame of animation effect picture.

By analogy, each frame of animation effect picture in a transition animation effect can be drawn. For a drawing method corresponding to the third frame of animation effect picture to the last frame of animation effect picture, refer to the process of drawing the second frame of animation effect picture. Details are not described herein again.

For example, the first frame of animation effect picture is used as an example. A progress corresponding to the animation effect playing time of 0 ms in the animation effect curve is 0. In this way, the first frame of animation effect picture is interface content corresponding to a case in which 0% of the second interface is displayed. In other words, content displayed by the first frame of animation effect picture is completely different from the second interface and is completely the same as the first interface.

The second frame of animation effect picture is used as an example. It is assumed that a progress corresponding to the animation effect playing time of 16.6 ms in the animation effect curve is 8.3. In this case, the second frame of animation effect picture is interface content corresponding to a case in which 8.3% of the second interface is displayed. The image transformation manner of gradually scaling up the second interface is used as an example. The second frame of animation effect picture is a picture corresponding to a case in which the second interface is scaled down to 8.3%.

In this way, interface drawing data corresponding to each frame of animation effect picture can be determined based on the interface drawing data corresponding to the second interface, an animation effect playing progress corresponding to each frame of animation effect picture, and the animation effect type. Further, a corresponding animation effect picture can be drawn based on the interface drawing data corresponding to each frame of animation effect picture.

It should be noted that, the foregoing embodiment is described by only using an example in which the correspondence between the animation effect playing progress and the animation effect playing time is represented by the animation effect curve. This is not intended to constitute a limitation. For example, the correspondence between the animation effect playing progress and the animation effect playing time may alternatively be represented by an array, a matrix, or the like.

It should be further noted that the foregoing embodiment is described by using only an example in which the animation effect playing progress value value is 0-100, and the animation effect playing progress value value may alternatively be another value. For example, the animation effect playing progress value value may alternatively be 0-500. In this case, when value=0, a corresponding animation effect playing progress is 0%, when value=100, a corresponding animation effect playing progress is 100%, and when value=250, a corresponding animation effect playing progress is 50%, and so on. Details are not described herein. In other words, the animation effect playing progress value value in the animation effect curve may be customized. This is not limited in this application.

In conclusion, in the first tap response optimization solution provided in the embodiments of this application, a trigger condition for a drawing operation on the first frame of animation effect picture is the animation effect start notification message. In this way, compared with the transition animation effect playing method shown in FIG. 3, time consumed in step S207 and step S208 is saved, so that tap response duration can be shortened by half a Vsync period on average.

The following describes a second tap response optimization solution provided in the embodiments of this application.

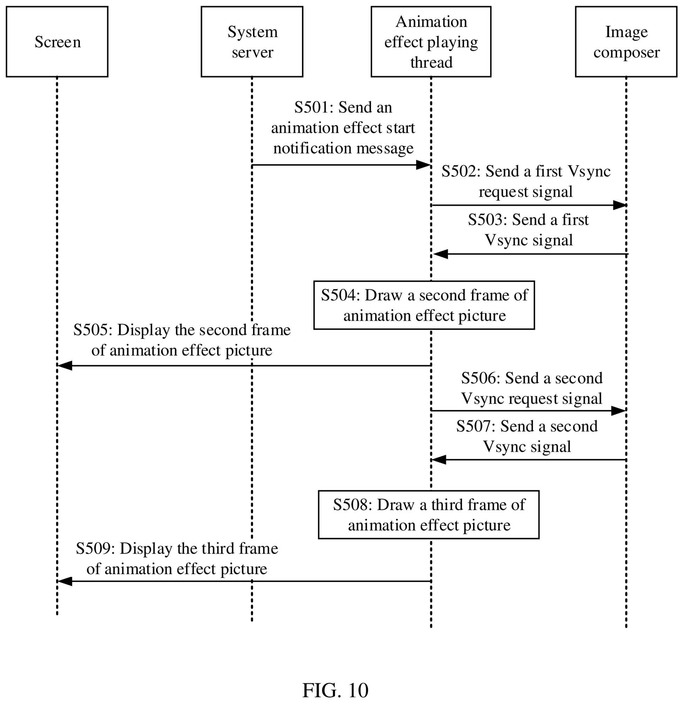

FIG. 10 is a flowchart of a transition animation effect playing method according to an embodiment of this application. As shown in FIG. 10, the method may include the following steps.

S501: A system server sends an animation effect start notification message to an animation effect playing thread.

S502: After receiving the animation effect start notification message, the animation effect playing thread sends a first Vsync request signal to an image composer.

S503: The image composer sends a first Vsync signal to the animation effect playing thread.

S504: In response to receiving the first Vsync signal, the animation effect playing thread draws a second frame of animation effect picture between a first interface and a second interface.

S505: Display the second frame of animation effect picture on a screen after the drawing operation on the second frame of animation effect picture is completed.

S506: The animation effect playing thread sends a second Vsync request signal to the image composer.

S507: The image composer sends a second Vsync signal to the animation effect playing thread.

S508: In response to receiving the second Vsync signal, the animation effect playing thread draws a third frame of animation effect picture between the first interface and the second interface.

S509: Display the third frame of animation effect picture on the screen after the drawing operation on the third frame of animation effect picture is completed.

The foregoing step S506 to step S509 are repeated until a last frame of animation effect picture is drawn, and the last frame of animation effect picture is displayed on the screen.

It may be learned from the animation effect curve shown in FIG. 9 that an animation effect playing progress corresponding to the first frame of animation effect picture in a transition animation effect is 0, that is, the first frame of animation effect picture is completely the same as the first interface. Therefore, even if the first frame of animation effect interface starts to be displayed in a user interface, a user can not perceive that the transition animation effect has been played because the first frame of animation effect picture is completely the same as the first interface. In other words, from a user perspective, an electronic device does not start to make any response to a tap operation.

Based on this, in the second tap response optimization solution provided in the embodiments of this application, the animation effect playing thread skips the first frame of animation effect picture and directly starts to draw and display the second frame of animation effect picture. In this case, the 1^{st} animation effect picture updated in the user interface is the second frame of animation effect picture. In this way, compared with the transition animation effect playing method shown in FIG. 3, the user may see a change of the user interface one Vsync period earlier, that is, tap response duration is shortened by a Vsync period.

For a method for drawing the second frame of animation effect picture between the first interface and the second interface, refer to descriptions of step S401 to step S405. For example, in response to reception of the first Vsync signal, the current system time t0 is obtained, and the current system time t0 is aligned with the animation effect playing time of 16.6 ms (following the animation effect playing start time by one Vsync period) in the animation effect curve. In other words, it is equivalent to initializing the system time t0 to animation effect playing time corresponding to the 2^{nd} Vsync period in the animation effect curve. In this way, in response to reception of the first Vsync signal, determined animation effect playing time is animation effect playing time corresponding to the second frame of animation effect picture. Further, an animation effect playing progress corresponding to the second frame of animation effect picture can be determined based on the animation effect curve (for example, the animation effect playing progress corresponding to the second frame of animation effect picture is 8.3). In this way, the first frame of animation effect picture can be skipped, and the second frame of animation effect picture directly starts to be drawn.

For another example, in response to reception of the first Vsync signal, the current system time t0 is obtained, and time obtained after a Vsync period is subtracted from the current system time t0 is aligned with the animation effect playing time of 0 ms in the animation effect curve. In other words, it is equivalent to initializing (t0-16.6 ms) to animation effect playing time (that is, the animation effect playing time of 0 ms) corresponding to the 1^{st} Vsync period in the animation effect curve. In this way, in response to reception of the first Vsync signal, the determined animation effect playing time is 16.6 ms. Further, an animation effect playing progress corresponding to the animation effect playing time of 16.6 ms is determined based on the animation effect curve, that is, the animation effect playing progress corresponding to the second frame of animation effect picture. It may be learned that in this way, in response to the first Vsync signal, the first frame of animation effect picture may be skipped, and the second frame of animation effect picture directly starts to be drawn.

It should be noted that for a step of drawing an animation effect picture based on an animation effect playing progress, refer to descriptions of step S401 to step S405. Details are not described herein again.

It should be further noted that in the embodiments of this application, for a part that is in the second tap response optimization solution and that is the same as a part in the first tap response optimization solution, refer to descriptions of the part in the first tap response optimization solution. Details are not described herein again. For example, for a method for determining an animation effect playing thread and the like, refer to descriptions of the first tap response optimization solution.

The following describes a third tap response optimization solution provided in the embodiments of this application.

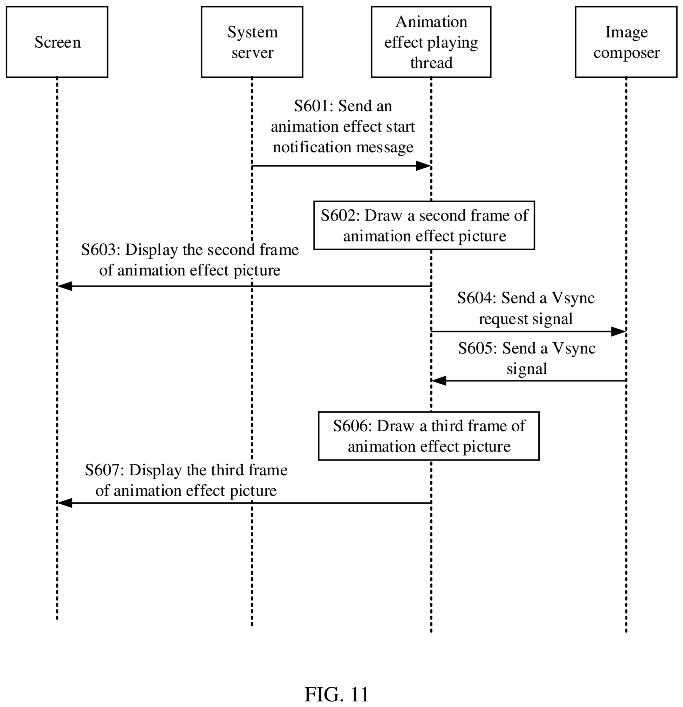

FIG. 11 is a flowchart of a transition animation effect playing method according to an embodiment of this application. As shown in FIG. 11, the method may include the following steps.

S601: A system server sends an animation effect start notification message to an animation effect playing thread.

S602: After receiving the animation effect start notification message, the animation effect playing thread draws a second frame of animation effect picture between a first interface and a second interface.

S603: Display the second frame of animation effect picture on a screen after the drawing operation on the first frame of animation effect picture is completed.

S604: The animation effect playing thread sends a Vsync request signal to an image composer.

S605: The image composer sends a Vsync signal to the animation effect playing thread.

S606: In response to receiving the Vsync signal, the animation effect playing thread draws a third frame of animation effect picture between the first interface and the second interface.

S607: Display the third frame of animation effect picture on the screen after the drawing operation on the third frame of animation effect picture is completed.

The foregoing step S604 to step S607 are repeated until a last frame of animation effect picture is drawn, and the last frame of animation effect picture is displayed on the screen.

In this way, in the third tap response optimization solution provided in the embodiments of this application, after receiving the animation effect start notification message, the animation effect playing thread skips the first frame of animation effect picture, and directly starts to draw and display the second frame of animation effect picture. In addition, a trigger condition for the drawing operation on the second frame of animation effect picture is the animation effect start notification message. In this way, compared with the transition animation effect playing method shown in FIG. 3, tap response duration can be shortened by one and a half Vsync period on average. Compared with the transition animation effect playing method shown in FIG. 6, the tap response duration can be shortened by one Vsync period on average. Compared with the transition animation effect playing method shown in FIG. 10, the tap response duration can be shortened by half a Vsync period on average.

For a method for drawing the second frame of animation effect picture between the first interface and the second interface, refer to descriptions of the second tap response optimization solution. For example, in response to reception of the animation effect start notification message, the current system time t0 is obtained, and the current system time t0 is aligned with the animation effect playing time of 16.6 ms (following the animation effect playing start time by one Vsync period) in the animation effect curve. In other words, it is equivalent to initializing the system time t0 to animation effect playing time corresponding to the 2^{nd} Vsync period in the animation effect curve. In this way, in response to reception of the animation effect start notification message, determined animation effect playing time is animation effect playing time corresponding to the second frame of animation effect picture. Further, an animation effect playing progress corresponding to the second frame of animation effect picture can be determined based on the animation effect curve (for example, the animation effect playing progress corresponding to the second frame of animation effect picture is 8.3). In this way, the first frame of animation effect picture can be skipped, and the second frame of animation effect picture directly starts to be drawn.

It should be further noted that in the embodiments of this application, for a part that is in the third tap response optimization solution and that is the same as a part in the first tap response optimization solution and a part in the second tap response optimization method, refer to descriptions of the part in the first tap response optimization solution and the part in the second tap response optimization solution. Details are not described herein again. For example, for a method for determining an animation effect playing thread and the like, refer to descriptions of the part in the first tap response optimization solution.

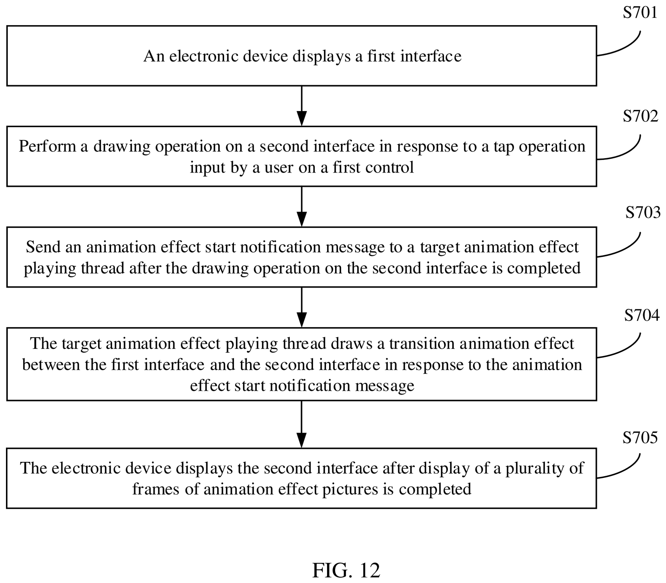

FIG. 12 is a flowchart of a transition animation effect playing method according to an embodiment of this application. As shown in FIG. 12, the method may include the following steps.

S701: An electronic device displays a first interface, where the first interface includes a first control.

In some embodiments, the first interface may be an interface of any application in the electronic device. In this case, the first control may be any control in any application interface.

In some embodiments, the first interface may be a main interface (also referred to as a home screen) of the electronic device. In this way, the first control may be a control of any application on the home screen.

S702: Perform a drawing operation on a second interface in response to a tap operation input by a user on the first control.

S703: Send an animation effect start notification message to a target animation effect playing thread after the drawing operation on the second interface is completed, where the animation effect start notification message is used to instruct the target animation effect playing thread to start an animation effect drawing operation.

For a specific implementation of step S701 to step S703, refer to descriptions of step S201 to step S206. Details are not described herein again.

S704: The target animation effect playing thread draws a transition animation effect between the first interface and the second interface in response to the animation effect start notification message, where the transition animation effect includes a plurality of frames of animation effect pictures.

In a possible implementation, that the target animation effect playing thread draws a transition animation effect between the first interface and the second interface in response to the animation effect start notification message may be specifically implemented in the following manner: The target animation effect playing thread draws a first animation effect picture in the plurality of frames of animation effect pictures in response to the animation effect start notification message, where the first animation effect picture is an initial frame of animation effect picture in the plurality of frames of animation effect pictures; sends a Vsync request signal to an image composer before drawing a second animation effect picture, where the second animation effect picture includes an animation effect picture different from the initial frame of animation effect picture in the plurality of frames of animation effect pictures; and draws the second animation effect picture in response to a Vsync signal. (For details, refer to descriptions of step S301 to step S307. Details are not described herein again.)

In a possible implementation, that the target animation effect playing thread draws a transition animation effect between the first interface and the second interface in response to the animation effect start notification message may be specifically implemented in the following manner: The target animation effect playing thread skips an initial frame of animation effect picture in the plurality of frames of animation effect pictures in response to the animation effect start notification message, and draws a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface; sends a Vsync request signal to an image composer before drawing a third animation effect picture, where the third animation effect picture includes an animation effect picture different from the initial frame of animation effect picture and the second frame of animation effect picture in the plurality of frames of animation effect pictures; and draws the third animation effect picture in response to a Vsync signal. (For details, refer to descriptions of step S601 to step S607. Details are not described herein again.)

In a possible implementation, the drawing a second frame of animation effect picture in the plurality of frames of animation effect pictures may be implemented in the following manner: obtaining, in response to the animation effect start notification message, interface drawing data and an animation effect parameter that correspond to the second interface, where the animation effect parameter includes an animation effect type and a correspondence between an animation effect playing progress and animation effect playing time; determining animation effect playing time corresponding to the second frame of animation effect picture; determining, based on an animation effect curve and the animation effect playing time corresponding to the second frame of animation effect picture, an animation effect playing progress corresponding to the second frame of animation effect picture; determining, based on the interface drawing data corresponding to the second interface, the animation effect playing progress corresponding to the second frame of animation effect picture, and the animation effect type, interface drawing data corresponding to the second frame of animation effect picture; and drawing the second frame of animation effect picture based on the interface drawing data corresponding to the second frame of animation effect picture. (For details, refer to descriptions of step S401 to step S405 and the second tap response optimization solution. Details are not described herein again.)

In a possible implementation, before the performing a drawing operation on a second interface, the method further includes: determining a tap operation scenario in response to the tap operation input by the user on the first control; and generating drawing information of the second interface when the tap operation scenario is an application startup scenario, where the drawing information includes remote animation effect indication information, and the remote animation effect indication information is used to indicate that the target animation effect playing thread is a remote animation effect playing thread. (For details, refer to descriptions of step S3011 to step S3016. Details are not described herein again.)

In a possible implementation, the sending an animation effect start notification message to a target animation effect playing thread after the drawing operation on the second interface is completed includes: obtaining the drawing information after the drawing operation on the second interface is completed; determining the target animation effect playing thread based on the drawing information; and sending the animation effect start notification message to the target animation effect playing thread. (For details, refer to descriptions of step S3011 to step S3016. Details are not described herein again.)

In a possible implementation, the determining the target animation effect playing thread based on the drawing information includes: when the drawing information includes the remote animation effect indication information, determining the remote animation effect playing thread as the target animation effect playing thread; and when the drawing information does not include the remote animation effect indication information, determining a local animation effect playing thread as the target animation effect playing thread. (For details, refer to descriptions of step S3011 to step S3016. Details are not described herein again.)

S705: The electronic device displays the second interface after display of the plurality of frames of animation effect pictures is completed.

After the transition animation effect is played, the second interface is displayed on the electronic device. By now, interface switching is ended.

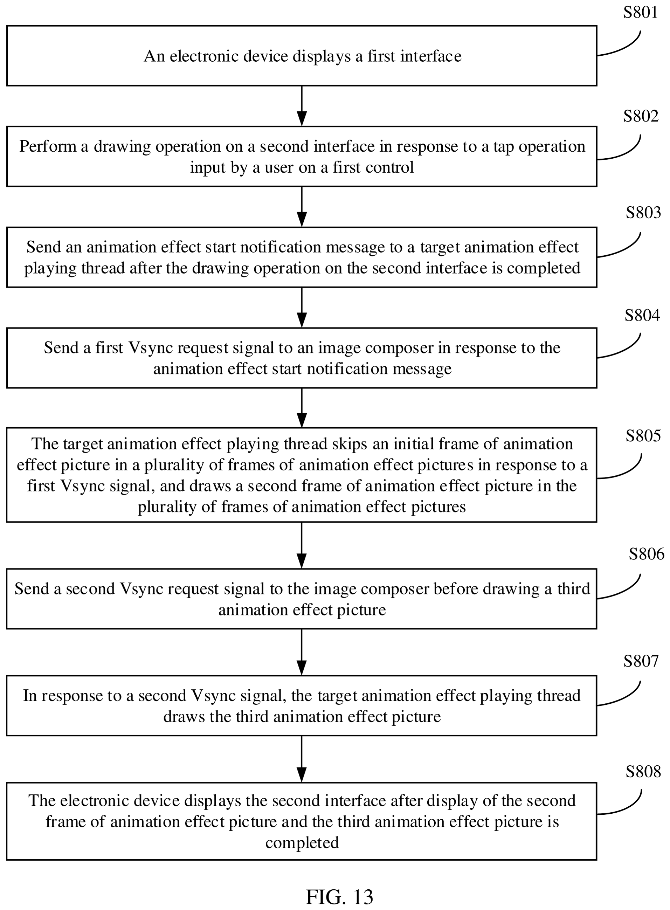

FIG. 13 is flowchart of another transition animation effect playing method according to an embodiment of this application. As shown in FIG. 13, the method may include the following steps.

S801: An electronic device displays a first interface, where the first interface includes a first control.

S802: Perform a drawing operation on a second interface in response to a tap operation input by a user on the first control.

S803: Send an animation effect start notification message to a target animation effect playing thread after the drawing operation on the second interface is completed, where the animation effect start notification message is used to instruct the target animation effect playing thread to start an animation effect playing operation.

S804: Send a first Vsync request signal to an image composer in response to the animation effect start notification message, where the first Vsync request signal is used to request to draw a transition animation effect between the first interface and the second interface, and the transition animation effect includes a plurality of frames of animation effect pictures.

S805: The target animation effect playing thread skips an initial frame of animation effect picture in the plurality of frames of animation effect pictures in response to the first Vsync signal, and draws a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface.

S806: Send a second Vsync request signal to the image composer before drawing a third animation effect picture, where the third animation effect picture includes an animation effect picture different from the initial frame of animation effect picture and the second frame of animation effect picture in the plurality of frames of animation effect pictures.

S807: In response to a second Vsync signal, the target animation effect playing thread draws the third animation effect picture.

S808: The electronic device displays the second interface after display of the second frame of animation effect picture and the third animation effect picture is completed.

For the foregoing step S801 to step S802, refer to descriptions of the second tap response optimization solution. Details are not described herein again.

The method embodiments described in this specification may be independent solutions, or may be combined based on internal logic. These solutions all fall within the protection scope of this application.

It may be understood that, the methods and operations implemented by the electronic device in the foregoing method embodiments may also be implemented by a component (for example, a chip or a circuit) that can be used in the electronic device.

The foregoing embodiments describe the transition animation effect playing method provided in this application. It may be understood that to implement the foregoing functions, the electronic device includes corresponding hardware structures and/or software modules for performing the functions. Persons skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on specific applications and design constraints of the technical solutions. Persons skilled in the art may use different methods to implement the described functions for each specific application, but it should not be considered that such an implementation goes beyond the scope of this application.

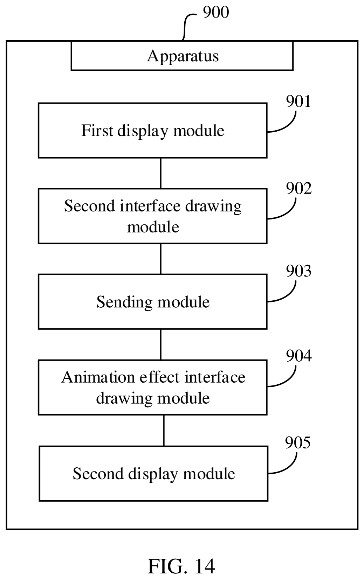

FIG. 14 is a schematic diagram of a structure of a transition animation effect playing apparatus according to an embodiment of this application. In an embodiment, an electronic device may implement a corresponding function by using the hardware apparatus shown in FIG. 14. As shown in FIG. 14, the apparatus 900 may include a first display module 901, a second interface drawing module 902, a sending module 903, an animation effect interface drawing module 904, and a second display module 905.

The first display module 901 is configured to display a first interface, where the first interface includes a first control.

The second interface drawing module 902 is configured to perform a drawing operation on a second interface in response to a tap operation input by a user on the first control.

The sending module 903 is configured to send an animation effect start notification message to a target animation effect playing thread after the drawing operation on the second interface is completed, where the animation effect start notification message is used to instruct the target animation effect playing thread to start an animation effect drawing operation.

The animation effect interface drawing module 904 is configured to draw, by the target animation effect playing thread, a transition animation effect between the first interface and the second interface in response to the animation effect start notification message, where the transition animation effect includes a plurality of frames of animation effect pictures.

The second display module 905 is configured to display, by the electronic device, the second interface after display of the plurality of frames of animation effect pictures is completed.

In a possible implementation, the animation effect interface drawing module 904 is configured to: draw, by the target animation effect playing thread, a first animation effect picture in the plurality of frames of animation effect pictures in response to the animation effect start notification message, where the first animation effect picture is an initial frame of animation effect picture in the plurality of frames of animation effect pictures; send a Vsync request signal to an image composer before drawing a second animation effect picture, where the second animation effect picture includes an animation effect picture different from the initial frame of animation effect picture in the plurality of frames of animation effect pictures; and draw, by the target animation effect playing thread, the second animation effect picture in response to the Vsync signal.

In a possible implementation, the animation effect interface drawing module 904 is configured to: skip, by the target animation effect playing thread, an initial frame of animation effect picture in the plurality of frames of animation effect pictures in response to the animation effect start notification message, and draw a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface; send a Vsync request signal to an image composer before drawing a third animation effect picture, where the third animation effect picture includes an animation effect picture different from the initial frame of animation effect picture and the second frame of animation effect picture in the plurality of frames of animation effect pictures; and draw, by the target animation effect playing thread, the third animation effect picture in response to the Vsync signal.

In a possible implementation, the animation effect interface drawing module 904 is configured to obtain, in response to the animation effect start notification message, interface drawing data and an animation effect parameter that correspond to the second interface, where the animation effect parameter includes an animation effect type and a correspondence between an animation effect playing progress and animation effect playing time; determine animation effect playing time corresponding to the second frame of animation effect picture; determine, based on the animation effect curve and the animation effect playing time corresponding to the second frame of animation effect picture, an animation effect playing progress corresponding to the second frame of animation effect picture; determine, based on the interface drawing data corresponding to the second interface, the animation effect playing progress corresponding to the second frame of animation effect picture, and the animation effect type, interface drawing data corresponding to the second frame of animation effect picture; and draw the second frame of animation effect picture based on the interface drawing data corresponding to the second frame of animation effect picture.

In a possible implementation, the second interface drawing module 902 is configured to determine the tap operation scenario in response to the tap operation input by the user on the first control; and generate drawing information of the second interface when the tap operation scenario is an application startup scenario, where the drawing information includes remote animation effect indication information, and the remote animation effect indication information is used to indicate that the target animation effect playing thread is a remote animation effect playing thread.

In a possible implementation, the sending module 903 is configured to obtain the drawing information after the drawing operation on the second interface is completed; determine the target animation effect playing thread based on the drawing information; and send the animation effect start notification message to the target animation effect playing thread.

In a possible implementation, the sending module 903 is configured to determine the remote animation effect playing thread as the target animation effect playing thread when the drawing information includes the remote animation effect indication information; and determine a local animation effect playing thread as the target animation effect playing thread when the drawing information does not include the remote animation effect indication information.

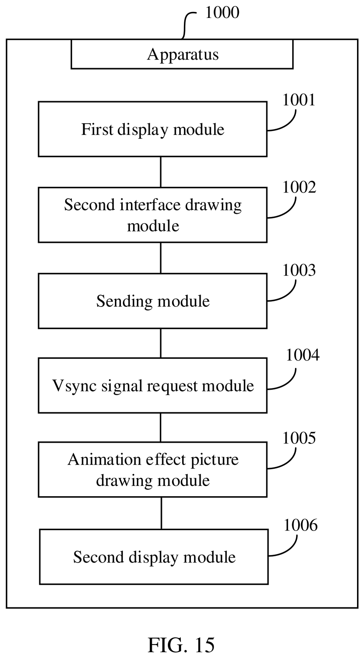

FIG. 15 is a schematic diagram of a structure of another transition animation effect playing apparatus according to an embodiment of this application. In an embodiment, an electronic device may implement a corresponding function by using the hardware apparatus shown in FIG. 15. As shown in FIG. 15, the apparatus 1000 may include a first display module 1001, a second interface drawing module 1002, a sending module 1003, a Vsync signal request module 1004, an animation effect picture drawing module 1005, and a second display module 1006.

The first display module 1001 is configured to display a first interface, where the first interface includes a first control.

The second interface drawing module 1002 is configured to perform a drawing operation on a second interface in response to a tap operation input by a user on the first control.

The sending module 1003 is configured to send an animation effect start notification message to a target animation effect playing thread after the drawing operation on the second interface is completed, where the animation effect start notification message is used to instruct the target animation effect playing thread to start an animation effect playing operation.

The Vsync signal request module 1004 is configured to send a first Vsync request signal to an image composer in response to the animation effect start notification message, where the first Vsync request signal is used to request to draw a transition animation effect between the first interface and the second interface, and the transition animation effect includes a plurality of frames of animation effect pictures.

The animation effect picture drawing module 1005 is configured to skip, by the target animation effect playing thread, an initial frame of animation effect picture in the plurality of frames of animation effect pictures in response to the first Vsync signal, and draw a second frame of animation effect picture in the plurality of frames of animation effect pictures, where the second frame of animation effect picture is a next frame of animation effect picture of the initial frame of animation effect picture in the plurality of frames of animation effect pictures, and the initial frame of animation effect picture is the same as the first interface.

The Vsync signal request module 1004 is configured to send a second Vsync request signal to the image composer before drawing a third animation effect picture, where the third animation effect picture includes an animation effect picture different from the initial frame of animation effect picture and the second frame of animation effect picture in the plurality of frames of animation effect pictures.

The animation effect picture drawing module 1005 is configured to draw, by the target animation effect playing thread, the third animation effect picture in response to the second Vsync signal.

The second display module 1006 is configured to display, by the electronic device, the second interface after display of the second frame of animation effect picture and the third animation effect picture is completed.

In other words, the apparatus 900 and the apparatus 1000 may implement steps or procedures corresponding to the method embodiments shown in FIG. 1 to FIG. 13, and the apparatus 900 and the apparatus 1000 may include modules configured to perform the methods performed in the method embodiments shown in FIG. 1 to FIG. 13. It should be understood that specific processes in which the modules perform the foregoing corresponding steps are described in detail in the foregoing method embodiments. For brevity, details are not described herein again.

In an implementation process, the steps of the foregoing method may be completed by a hardware-integrated logic circuit in the processor or instructions in a form of software. The steps of the method disclosed with reference to the embodiments of this application may be directly performed by a hardware processor, or by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein.

It should be noted that the processor in the embodiments of this application may be an integrated circuit chip having a signal processing capability. In an implementation process, the steps in the foregoing method embodiments may be completed by a hardware-integrated logic circuit in the processor or instructions in a form of software. The foregoing processor may be a general-purpose processor, a digital signal processor (DSP), an application-specific integrated circuit (ASIC), a field programmable gate array (FPGA) or another programmable logic device,
a discrete gate or a transistor logic device, or a discrete hardware component. The methods, steps, and logical block diagrams disclosed in the embodiments of this application may be implemented or performed. The general-purpose processor may be a microprocessor, or the processor may be any conventional processor or the like. The steps of the method disclosed with reference to the embodiments of this application may be directly performed by a hardware decoding processor, or performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories used for the system and the method described in this specification are intended to include but are not limited to these and any other proper types of memories.

According to the method provided in the embodiments of this application, an embodiment of this application further provides a computer program product. The computer program product includes a computer program or instructions. When the computer program or the instructions are run on a computer, the computer is enabled to perform the method according to any one of the method embodiments.

According to the method provided in the embodiments of this application, an embodiment of this application further provides a computer storage medium. The computer storage medium stores a computer program or instructions. When the computer program or the instructions are run on a computer, the computer is enabled to perform the method according to any one of the method embodiments.

According to the method provided in the embodiments of this application, an embodiment of this application further provides an electronic device, including a memory and a processor. The memory is coupled to the processor, the memory is configured to store computer program code, the computer program code includes computer instructions, and when the processor executes the computer instructions, the electronic device is enabled to perform the method according to any one of the method embodiments.

Persons of ordinary skill in the art may be aware that, various illustrative logical blocks (illustrative logical block) and steps (step) described with reference to the embodiments disclosed in this specification can be implemented by electronic hardware or a combination of computer software and electronic hardware. Whether these functions are performed by hardware or software depends on specific applications and design constraints of the technical solutions. Persons skilled in the art may use different methods to implement the described functions for each specific application, but it should not be considered that such an implementation goes beyond the scope of this application.

Persons skilled in the art may clearly understand that for ease and brevity of description, for a specific operation process of the apparatus and module described above, refer to a corresponding process in the foregoing method embodiments. Details are not described herein.

In the several embodiments provided in this application, it should be understood that the disclosed apparatus and method may be implemented in another manner. For example, the apparatus embodiment described above is merely an example. For example, division into the modules is merely logical function division. In an actual implementation, there may be another division manner. For example, a plurality of modules or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical units, that is, may be located at in one place, or may be distributed on a plurality of network units. Some or all of the modules may be selected based on actual requirements to achieve the objectives of the solutions in the embodiments.

In addition, functional modules in the embodiments of this application may be integrated into one processing unit, or each module may exist alone physically, or two or more modules may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The apparatus, the computer storage medium, the computer program product, and the electronic device provided in the embodiments of this application are all configured to perform the method provided above. Therefore, for beneficial effects that can be achieved by the apparatus, the computer storage medium, the computer program product, and the electronic device provided in the embodiments of this application, refer to the beneficial effects corresponding to the method provided above. Details are not described herein again.

It should be understood that in the embodiments of this application, an execution order of the steps should be determined based on functions and internal logic of the steps. Sequence numbers of the steps do not mean an execution order, and should not constitute a limitation on the implementation processes of the embodiments.

The parts of this specification are all described in a progressive manner, and for same or similar parts in the embodiments, reference may be made to each other. Descriptions of each embodiment focus on a difference from other embodiments. In particular, embodiments of the apparatus, the computer storage medium, the computer program product, and the electronic device are basically similar to the method embodiments, and therefore are described relatively briefly. For related parts, refer to descriptions in the method embodiments.

Although preferred embodiments of this application have been described, persons skilled in the art can make other changes and modifications to these embodiments once they know the basic creative concept. Therefore, the appended claims are intended to be construed as to cover the preferred embodiments and all changes and modifications falling within the scope of this application.

The foregoing implementations of this application do not constitute a limitation on the protection scope of this application.

## Claims

1. A transition animation effect playing method, wherein the method is applied to an electronic device, and the method comprises:
displaying, by the electronic device, a first interface, wherein the first interface comprises a first control;
performing a drawing operation on a second interface in response to a tap operation input by a user on the first control;
sending an animation effect start notification message to a target animation effect playing thread after the drawing operation on the second interface is completed, wherein the animation effect start notification message is used to instruct the target animation effect playing thread to start an animation effect drawing operation;
drawing, by the target animation effect playing thread, a transition animation effect between the first interface and the second interface in response to the animation effect start notification message, wherein the transition animation effect comprises a plurality of frames of animation effect pictures; and
displaying, by the electronic device, the second interface after display of the plurality of frames of animation effect pictures is completed.

2. The method according to claim 1, wherein the drawing, by the target animation effect playing thread, a transition animation effect between the first interface and the second interface in response to the animation effect start notification message comprises:
drawing, by the target animation effect playing thread, a first animation effect picture in the plurality of frames of animation effect pictures in response to the animation effect start notification message, wherein the first animation effect picture is an initial frame of animation effect picture in the plurality of frames of animation effect pictures;
sending a Vsync request signal to an image composer before drawing a second animation effect picture, wherein the second animation effect picture comprises an animation effect picture different from the initial frame of animation effect picture in the plurality of frames of animation effect pictures; and
drawing, by the target animation effect playing thread, the second animation effect picture in response to the Vsync signal.

3. The method according to claim 1, wherein the drawing, by the target animation effect playing thread, a transition animation effect between the first interface and the second interface in response to the animation effect start notification message comprises:
skipping, by the target animation effect playing thread, an initial frame of animation effect picture in the plurality of frames of animation effect pictures in response to the animation effect start notification message, and drawing a second frame of animation effect picture in the plurality of frames of animation effect pictures, wherein the second frame of animation effect picture is a next frame of animation effect picture of the initial frame of animation effect picture in the plurality of frames of animation effect pictures, and the initial frame of animation effect picture is the same as the first interface;
sending a Vsync request signal to an image composer before drawing a third animation effect picture, wherein the third animation effect picture comprises an animation effect picture different from the initial frame of animation effect picture and the second frame of animation effect picture in the plurality of frames of animation effect pictures; and
drawing, by the target animation effect playing thread, the third animation effect picture in response to the Vsync signal.

4. The method according to claim 3, wherein the drawing a second frame of animation effect picture in the plurality of frames of animation effect pictures comprises:
obtaining, in response to the animation effect start notification message, interface drawing data and an animation effect parameter that correspond to the second interface, wherein the animation effect parameter comprises an animation effect type and a correspondence between an animation effect playing progress and animation effect playing time;
determining animation effect playing time corresponding to the second frame of animation effect picture;
determining, based on the animation effect curve and the animation effect playing time corresponding to the second frame of animation effect picture, an animation effect playing progress corresponding to the second frame of animation effect picture;
determining, based on the interface drawing data corresponding to the second interface, the animation effect playing progress corresponding to the second frame of animation effect picture, and the animation effect type, interface drawing data corresponding to the second frame of animation effect picture; and
drawing the second frame of animation effect picture based on the interface drawing data corresponding to the second frame of animation effect picture.

5. The method according to claim 1, before the performing a drawing operation on a second interface, further comprising:
determining the tap operation scenario in response to the tap operation input by the user on the first control; and
generating drawing information of the second interface when the tap operation scenario is an application startup scenario, wherein the drawing information comprises remote animation effect indication information, and the remote animation effect indication information is used to indicate that the target animation effect playing thread is a remote animation effect playing thread.

6. The method according to claim 5, wherein the sending an animation effect start notification message to a target animation effect playing thread after the drawing operation on the second interface is completed comprises:
obtaining the drawing information after the drawing operation on the second interface is completed;
determining the target animation effect playing thread based on the drawing information; and
sending the animation effect start notification message to the target animation effect playing thread.

7. The method according to claim 6, wherein the determining the target animation effect playing thread based on the drawing information comprises:
when the drawing information comprises the remote animation effect indication information, determining the remote animation effect playing thread as the target animation effect playing thread; and
when the drawing information does not comprise the remote animation effect indication information, determining a local animation effect playing thread as the target animation effect playing thread.

8. The method according to any one of claims 5-7, wherein the local animation effect playing thread comprises a default animation effect playing thread in a system server of the electronic device, and the remote animation effect playing thread comprises a desktop launcher.

9. The method according to claim 1, wherein the first interface is a main interface of the electronic device; or the first interface is an interface of an application in the electronic device.

10. A transition animation effect playing method, wherein the method is applied to an electronic device, and the method comprises:
displaying, by the electronic device, a first interface, wherein the first interface comprises a first control;
performing a drawing operation on a second interface in response to a tap operation input by a user on the first control;
sending an animation effect start notification message to a target animation effect playing thread after the drawing operation on the second interface is completed, wherein the animation effect start notification message is used to instruct the target animation effect playing thread to start an animation effect playing operation;
sending a first Vsync request signal to an image composer in response to the animation effect start notification message, wherein the first Vsync request signal is used to request to draw a transition animation effect between the first interface and the second interface, and the transition animation effect comprises a plurality of frames of animation effect pictures;
skipping, by the target animation effect playing thread, an initial frame of animation effect picture in the plurality of frames of animation effect pictures in response to the first Vsync signal, and drawing a second frame of animation effect picture in the plurality of frames of animation effect pictures, wherein the second frame of animation effect picture is a next frame of animation effect picture of the initial frame of animation effect picture in the plurality of frames of animation effect pictures, and the initial frame of animation effect picture is the same as the first interface;
sending a second Vsync request signal to the image composer before drawing a third animation effect picture, wherein the third animation effect picture comprises an animation effect picture different from the initial frame of animation effect picture and the second frame of animation effect picture in the plurality of frames of animation effect pictures;
drawing, by the target animation effect playing thread, the third animation effect picture in response to the second Vsync signal; and
displaying, by the electronic device, the second interface after display of the second frame of animation effect picture and the third animation effect picture is completed.

11. The method according to claim 10, wherein the skipping, by the target animation effect playing thread, an initial frame of animation effect picture in the plurality of frames of animation effect pictures in response to the first Vsync signal, and drawing a second frame of animation effect picture in the plurality of frames of animation effect pictures comprises:
obtaining, in response to the first Vsync signal, interface drawing data and an animation effect parameter that correspond to the second interface, wherein the animation effect parameter comprises an animation effect type and a correspondence between an animation effect playing progress and animation effect playing time;
determining animation effect playing time corresponding to the second frame of animation effect picture;
determining, based on the animation effect curve and the animation effect playing time corresponding to the second frame of animation effect picture, an animation effect playing progress corresponding to the second frame of animation effect picture;
determining, based on the interface drawing data corresponding to the second interface, the animation effect playing progress corresponding to the second frame of animation effect picture, and the animation effect type, interface drawing data corresponding to the second frame of animation effect picture; and
drawing the second frame of animation effect picture based on the interface drawing data corresponding to the second frame of animation effect picture.

12. An electronic device, wherein the electronic device comprises a memory and a processor, the memory is coupled to the processor, the memory is configured to store computer program code, the computer program code comprises computer instructions, and when the processor executes the computer instructions, the electronic device is enabled to perform the method according to any one of claims 1-11.

13. A computer program product, wherein the computer program product comprises a computer program or instructions, and when the computer program or the instructions are run on a computer, the computer is enabled to perform the method according to any one of claims 1-11.
